(19) **Europäisches Patentamt / European Patent Office / Office européen des brevets**

(11) **EP 2 565 621 A1**

(12) # EUROPEAN PATENT APPLICATION
published in accordance with Art. 153(4) EPC

(43) Date of publication:
06.03.2013 Bulletin 2013/10

(21) Application number: 11756416.1

(22) Date of filing: 17.03.2011

(51) Int Cl.:
*G01N 21/17* (2006.01)     *G01B 9/02* (2006.01)
*G01B 11/24* (2006.01)

(86) International application number:
**PCT/JP2011/056479**

(87) International publication number:
**WO 2011/115232 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 17.03.2010 JP 2010060034

(71) Applicant: National University Corporation
Nagaoka University
Nagaoka-shi, Niigata 940-2188 (JP)

(72) Inventor: **SHIODA Tatsutoshi**
**Nagaoka-shi**
**Niigata 940-2188 (JP)**

(74) Representative: **Viering, Jentschura & Partner**
**Grillparzerstrasse 14**
**81675 München (DE)**

(54) ## ELECTRIC FIELD SPECTRUM MEASUREMENT DEVICE AND OBJECT MEASUREMENT DEVICE

(57)     Every depth of the measurement object measures energy structural information, refractive index, transmittance, reflectance other than property information of (as for the resolution several microns), e.g., space information at the same time.

A spectrum measurement device receives a reference wave propagating in a reference path and a measurement wave propagating in a measurement path having a start point same as a start point of the reference path, and derives a spectrum of the measurement wave.

The space information of the measuring object, energy structural information, refractive index, transmittance, a reflective index using spectrum measurement device are derived.

*fig. 1*

**Description**

FIELD OF THE INVENTION

The present invention relates to spectrum measurement device. The spectrum measurement device receives a reference wave and a measurement wave. The spectrum measurement device can measure various kinds of spectrum of the measurement wave based on "a spectrum of the reference wave" and "a signal which are proportional to a reference wave and a square of the synthesized wave of the measurement wave".
The present invention relates to an object measurement device which can measure space information about measured object, energy structural information, index of refraction, transmittance, reflective index, etc., using the spectrum measurement device.

BACKGROUND OF THE INVENTION

Some techniques that measure an interference signal by a mirror-sweep is known conventionally.

patent document 1: JP2001-272335A
patent document 2: JP2003-025660A

In these techniques, a white light source is used. By using the white light source, a high resolution measurement becomes possible and these techniques can provide some simple spectrum information.

SUMMARY OF THE INVENTION

PROBLEM TO BE SOLVED BY THE INVENTION

However, in the techniques of the patent document 1 and 2, the spectrum information separated in space can not be measured.
One object of the present invention is to provide a spectrum measurement device which can measure various kinds of spectra of the measurement wave based on "spectrum of reference wave" and "signal being proportional to square of a synthesized wave of reference wave and measurement wave".
Another object of the present invention is to provide an object measurement device which can measure at least one of space information, energy structural information, refractive index, transmittance and reflective index of a measurement object by using the spectrum measurement device.

MEANS TO SOLVE THE PROBLEM

Subject matter of a first mode of a spectrum measurement device of the present invention includes (1) and (2).

(1) A spectrum measurement device which receives a reference wave propagating in a reference path and a measurement wave propagating in a measurement path having a start point same as a start point of the reference path, and derives a spectrum of the measurement wave, wherein the spectrum is a spectrum of measurement wave that is turned back on surface or inside of a measurement object,
or a spectrum of measurement wave that penetrates the measurement object,
a spectrum of the measurement wave is measured based on spectrum of the reference wave and a signal being proportional to square of an synthesized wave of the reference wave and the measurement wave.

(2) A spectrum measurement device according to (1),
wherein spectrum of the measurement wave is power spectrum and the power spectrum is represented by next expression.
[a spectrum provided by executing Fourier transform of signal proportionate to square of an synthesized wave of a reference wave and a measurement wave]$^2$/[a spectrum of a reference wave]

For example, the spectrum measurement device receives a reference wave Sr propagating a reference wave path, and receives a measurement wave Ss propagating in a measurement wave path having a start point same as a start point of the reference path.

And the spectrum measurement device can measure at least one of electric field spectrum $E_s(\omega)$, power spectrum $|E_s(\omega)|^2$, amplitude spectrum As and phase spectrum $\varphi_s$ of measurement wave $S_s$. In this case, about autocorrelation $I_{rr}$ of the reference wave $S_r$, Fourier transform $F_{rr}$ is executed.

Power spectrum $|E|^2$ of the above reference wave $S_r$ is thereby got. At the same time, a square of Fourier transform $F_{rs}$ of a cross-correlation $I_{rs}$ between a reference wave $S_r$ and a measurement wave $S_s$ is obtained.

Based on power spectrum $|E_r|^2$ of the reference wave $S_r$ and Fourier transform $F_{rs}$ of cross-correlation $I_{rs}$, at least one of electric field spectrum $E_s(\omega)$, power spectrum $|E_s(\omega)|^2$, amplitude spectrum As and phase spectrum $\varphi_s$ are obtained.

Herein, power spectrum $|E_s|^2$ is represented by next expression.

$$|E_s|^2 = (\text{Fourier transform } F_{rs} \text{ of cross-correlation } I_{rs})_2 / (\text{Fourier transform } F_{rr} \text{ of autocorrelation } I_{rr} \text{ of the reference wave } S_r)$$

Subject matter of a first mode of the object measurement device of the present invention includes (3) and (4).

(3) An object measurement device comprising a property identification device,
wherein the property identification device has a facility of the spectrum measurement device described in (1),
the reference wave path and the measurement wave path have the same start point,
the measurement wave path is formed to be turned back on surface or inside of a measurement object, or to penetrate the measurement object,
the property identification device derives property information (for example, at least one of space information, energy structural information, refractive index, transmission factor and reflectance) of the measurement device based on spectrum of the measurement wave.

(4) An object measurement device according to (3),
wherein the reference wave has a characteristic that delay time or advance time changes gradually along a virtual line which is perpendicular to a propagation direction,
or, the reference wave has a characteristic that delay time or advance time changes gradually along a virtual line on a virtual XY plane which is perpendicular to a propagation direction.

For example, the object measurement device comprises the property identification device with a facility of the spectrum measurement device. In the object measurement device, a reference wave path and a measurement wave path start from the same light source. The measurement wave path is formed to be turned back on surface or inside of a measurement object, or to penetrate the measurement object.

The property identification device derives property information (for example, at least one of space information, energy structural information, refractive index, transmission factor and reflectance) of the measurement device based on spectrum of the measurement wave.

In this object measurement device, a total reflection mirror can be set at a position of a measurement object, and a reference path is turned back with this total reflection mirror.

Subject matter of a second mode of a spectrum measurement device of the present invention includes (5).

(5) A spectrum measurement device receives reference wave propagating in a reference path, and receives measurement wave propagating in a measurement path having a start point same as a start point of the reference path, derives spectrum of the measurement wave,

wherein a spectrum of the reference wave is derived,
at the same time, Fourier transform of cross-correlation between the reference wave and the measurement wave is got,
the spectrum of the measurement wave is got based on the spectrum of the reference wave and the Fourier transform of the cross-correlation.

Specifically, electric field spectrum $E_s(\omega)$ is represented as complex conjugate of electric field spectrum $E_s(\omega)$ of a measurement wave $S_s$.

$$E_s^* = [\text{Fourier transform } F_{rs} \text{ of cross-correlation } I_{rs}] / [\text{electric field spectrum of the reference wave } S_r]$$

Es* is complex conjugate of $E_s$.

Subject matter of a second mode of an object measurement device of the present invention includes (6) and (7).

(6) An object measurement device comprising a property identification device,
wherein the property identification device has facility of the spectrum measurement device described in (5),
a reference wave path and the measurement wave path have the same start point,
the measurement wave path is formed to be turned back on surface or inside of a measurement object, or to penetrate the measurement object,
the property identification device derives property information (for example, at least one of space information, energy structural information, refractive index, transmission factor and reflectance) of the measurement device based on spectrum of the measurement wave.

(7)
An object measurement device according to (6),
wherein the reference wave has a characteristic that delay time or advance time changes gradually along a virtual line which is perpendicular to a propagation direction,
or, the reference wave has a characteristic that delay time or advance time changes gradually along a virtual line on a virtual XY plane which is perpendicular to a propagation direction.

Subject matter of a third mode of an object measurement device of the present invention includes (8) and (9).

(8)
A spectrum measurement device which receives
a reference wave propagating in a reference path and
a first measurement wave, a second measurement wave, ... , a N-th measurement wave propagating in a first measurement paths, a second measurement paths, ..., a N-th measurement paths having a start point same as a start point of the reference path, and derives spectra of the first, the second, ..., the N-th measurement wave, wherein the spectra are
spectra of the first measurement wave, the second measurement wave, ..., the N-th measurement wave which are turned back on surface or inside of a measurement object, or
spectra of the first measurement wave, the second measurement wave, ..., the N-th measurement wave which penetrate the measurement object;
spectra of the first measurement wave, the second measurement wave, ... , the N-th measurement wave are measured based on spectra of the reference wave and signals being proportional to square of each synthesized wave of the reference wave and the 1st, the 2nd, ... , the N-th measurement wave.

(9) The spectrum measurement device according to (8),
wherein each spectrum of the first measurement wave, the second measurement wave, ..., the N-th measurement wave is power spectrum,
the power spectrum of the k-th measurement wave (k: 1, 2,... or N) is represented by next expression.
[a spectrum provided by executing Fourier transform of signal proportionate to square of an synthesized wave of a reference wave and a k-th measurement wave]$^2$/[a spectrum of a reference wave]

For example, the spectrum measurement device receives the reference $S_r$ wave propagating in a reference wave path and the 1st, the 2nd, ..., the N-th measurement waves $S_{s1}$, $S_{s2}$, ..., $S_{sN}$ propagating in the 1st, the 2nd, ..., the N-th measurement wave path having a start point same as a start point of the reference path.
And the spectrum measurement device can measure electric field spectra $E_s(\omega)$ of the 1st, the 2nd, ..., the N-th measurement waves $S_{s1}$, $S_{s2}$, ..., $S_{sN}$.
In this case, the spectrum measurement can measure at least one of electric field spectra $E_{s1}(\omega)$, $E_{s2}(\omega)$, ..., $E_{sN}(\omega)$ of the 1st, the 2nd, ..., the N-th measurement waves $S_{s1}$, $S_{s2}$, ..., $S_{sN}$, power spectrum $|E_{s1}(\omega)|^2$, $|E_{s2}(\omega)|^2$, ..., $|E_{sN}(\omega)|^2$, amplitude spectra $A_{s1}(\omega)$, $A_{s2}(\omega)$, ...., $A_{sN}(\omega)$, phase spectra $\varphi_{s1}(\omega)$, $\varphi_{s2}(\omega)$, ...., $\varphi_{sN}(\omega)$.
The spectrum measurement device can obtain the power spectrum $|E_r|^2$ by executing Fourier transform about an auto-correlation $I_{rr}$ of the reference wave $S_r$ and can obtain squares of Fourier transforms $F_{rs1}$, $F_{rs2}$, ..., $F_{rsN}$ of a cross-correlations $I_{rs1}$, $I_{rs2}$, ..., $I_{rsN}$ between a reference wave $S_r$ and the 1st, the 2nd, ..., the N-th measurement waves $S_{s1}$,

$S_{s2}$, ..., $S_{sN}$.

At least one of the spectra are measured based on the power spectrum $|E_r|^2$ of the reference wave $S_r$ and squares of Fourier transforms $F_{rs1}$, $F_{rs2}$, ..., $F_{rsN}$ of a cross-correlations $I_{rs1}$, $I_{rs2}$, ..., $I_{rsN}$.

Subject matter of a second mode of an object measurement device of the present invention includes (10) and (11).

(10) An object measurement device comprising a property identification device,
wherein the property identification device has facility of the spectrum measurement device described in (9),
the reference wave path and a first measurement wave path, a second measurement wave path, ..., the N-th wave path have the same start point,
the first measurement wave path, the second measurement wave path, ..., the N-th measurement wave path are formed to be turned back on surface or inside of a measurement object, or to penetrate the measurement object,
the property identification device derives property information of the measurement device based on spectra of a first measurement wave, a second measurement wave, ..., a N-th measurement wave.

(11) Object measurement device according to (10),
wherein the reference wave has a characteristic that delay time or advance time changes gradually along a virtual line which is perpendicular to a propagation direction,
or, the reference wave has a characteristic that delay time or advance time changes gradually along a virtual line on a virtual XY plane which is perpendicular to a propagation direction.

The object measurement device comprising a property identification device with a facility of the spectrum measurement device. The reference wave path and a first measurement wave path, a second measurement wave path, ..., the N-th wave path have the same start point. The first measurement wave path, the second measurement wave path, ..., the N-th measurement wave path are formed to be turned back on surface or inside of a measurement object, or to penetrate the measurement object.

The property identification device derives property information (for example, at least one of space information, energy structural information, refractive index, transmission factor and reflectance) of the measurement device based on electric field spectrum $E_{s1}(\omega)$, $E_{s2}(\omega)$, ..., $E_{sN}(\omega)$ of the first measurement waves, the second measurement waves, ..., the N-th measurement waves $S_{s1}$, $S_{s2}$, ..., $S_{sN}$.

Subject matter of a fourth mode of an object measurement device of the present invention includes (12).

(12) A spectrum measurement device which receives a reference wave propagating in a reference path and a first measurement wave, a first measurement waves, a second measurement wave, ..., a N-th measurement wave propagating in a first measurement path, a second measurement path, ..., a N-th measurement path having respectively a start point same as a start point of the reference path, and derives electric field spectra of the first measurement wave, the second measurement wave, ...N-th measurement wave,
wherein Fourier transform of the cross-correlation between the reference wave and the first measurement wave, the second measurement wave, ..., the N-th is respectively derived, and the electric field spectra are measured based on the spectra of the reference wave and Fourier transform of the cross-correlation.

Subject matter of a fourth mode of an object measurement device of the present invention includes (13) and (14).

(13) An object measurement device comprising a property identification device,
wherein the property identification device has facility of the spectrum measurement device described in (12),
a reference wave path and a first measurement wave path, a second measurement wave path, ..., a N-th measurement wave path have the same start point,
the first measurement wave path, the second measurement wave path, ..., the N-th measurement wave path are formed to be turned back on surface or inside of a measurement object, or to penetrate the measurement object,
the property identification device derives property information of the measurement device based on spectrum of the first measurement wave, the second measurement wave path, ..., the N-th measurement wave.

(14) An object measurement device according to (13),
wherein the reference wave has a characteristic that delay time or advance time changes gradually along a virtual line which is perpendicular to a propagation direction,
or, the reference wave has a characteristic that delay time or advance time changes gradually along a virtual line on a virtual XY plane which is perpendicular to a propagation direction.

The object measurement device comprises property identification device with a function of the spectrum measuring instrument.

The first measurement wave path, the second measurement wave path,..., the N-th measurement wave path start from the same source (light source), and the first measurement wave path, the second measurement wave path,..., the N-th measurement wave path are formed to turn back in the surface or the inside of the measurement object O, or penetrate through a measurement object O.

The property identification device can derive the property information (e.g., at least one of space information, energy structural information, refractive index, transmittance, reflective index) of the measurement object based on electric field spectra $E_{s1}(\omega)$, $E_{s2}(\omega)$, ..., $E_{sN}(\omega)$ of the first measurement wave, the second measurement wave, ..., the N-th measurement wave $S_{s1}$, $S_{s2}$, ..., $S_{sN}$.

[the first basic mode]

A first basic mode supports the spectrum measurement device of above (1) or (2), and the object measurement device of above (3).

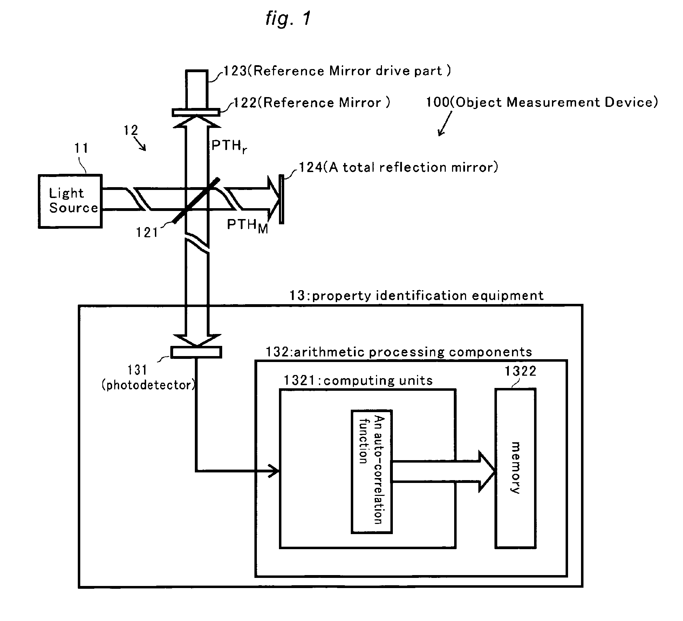

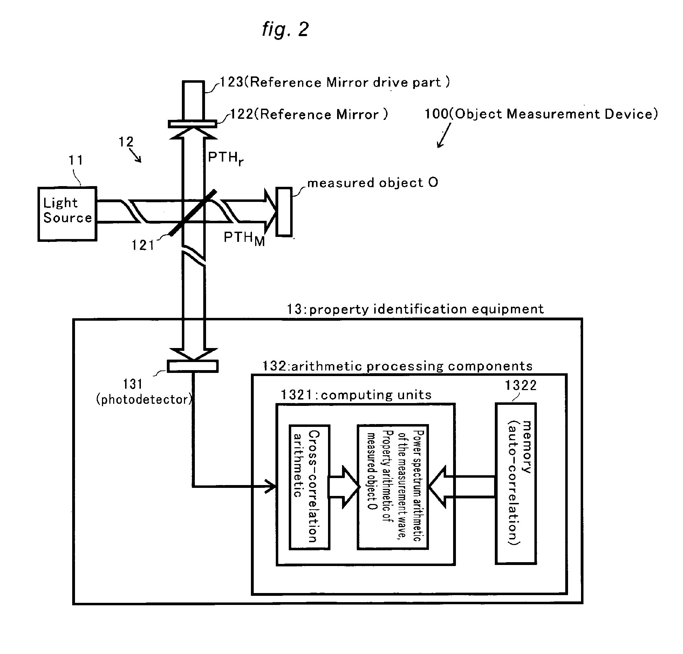

The first basic mode of the present invention is described according to FIG. 1 and FIG. 2. In this mode a reference wave $S_r$ and a measurement wave $S_s$ describe are lights respectively.

Note that the present invention is applicable to X-rays, terahertz frequency wave, radio wave, millimeter wave other than light.

As shown in FIG. 1 and FIG. 2, an object measurement device 100 comprises a source (a light source 11), an interferometer 12 and a property identification device 13.

A light emitted from the light source 11 is typically a broadband light such as a white light.

The interferometer 12 includes a beam splitter 121, a reference mirror 122 and a reference mirror drive 123 in this mode.

A reference wave path $PTH_r$ starts from the light source 11 and arrives at the reference mirror 122 through beam the splitter 121. The reference wave path PTHr turns back on the reference mirror 122 and further arrives at the property identification device 13 through the beam splitter 121.

As shown in FIG. 2, the measurement wave path $PTH_s$ starts from the light source 11 and arrives at a measurement object O through the beam splitter 121. The measurement wave path $PTH_s$ turns back at the measurement object O and further arrives at the property identification device 13 through the beam splitter 121.

The property identification device 13 includes a facility as a spectrum measurement device, and consists of a photo detector 131 and an arithmetic processing component 132.

The arithmetic processing component 132 calculates autocorrelation $I_{rr}$ of the reference wave $S_r$ and executes Fourier transform $F_{rr}$ of autocorrelation $I_{rr}$.

Even more particularly, the arithmetic processing component 132 calculates cross-correlation $I_{rs}$ between the reference wave $S_r$ and the measurement wave $S_s$. The arithmetic processing component 132 executes Fourier transform $F_{rs}$ of cross-correlation $I_{rs}$.

At least one following characteristics are calculated by Fourier transform $F_{rr}$ and $F_{rs}$.

Electric field spectrum of measurement wave $S_s$: $E_s(\omega)$

Power spectrum: $|E_s(\omega)|^2$

Amplitude spectrum: $A_s(\omega)$

Phase spectrum: $\varphi_s(\omega)$

As shown in FIG. 1, in a case autocorrelation $I_{rr}$ is necessary, a total reflection mirror 124 is provided at the position of the measurement object O.

The arithmetic processing component 132 comprises an arithmetic unit 1321 and previously described a memory 1322.

The arithmetic unit 1321 calculates autocorrelation $I_{rr}$ and calculates Fourier $F_{rr}$ transform. Fourier transform $F_{rr}$ is stored to the memory 1322.

On the other hand, on occasion of measurement of the measurement object O, the photo detector 131 receives the reference wave $S_r$ and the measurement wave Ss reflected at the measurement object O through the beam splitter 121 as shown in FIG. 2.

The arithmetic unit 1321 receives an interference wave that the photo detector 131 detected as an electrical signal, the arithmetic unit 1321 accounts cross-correlation $I_{rs}$ from the reference wave $S_r$ and the measurement wave $S_s$, and the arithmetic unit 1321 calculates Fourier transform $F_{rm}$.

The arithmetic unit 1321 can calculate power spectrum $|E_s|^2$ of a measurement wave Ss like next expression based on Fourier transform $F_{rr}$ of autocorrelation $I_{rr}$ stored in the memory 1322 and Fourier transform $F_{rs}$ of and cross-correlation $I_{rs}$.

$$|E_s|^2 = (\text{Fourier transform } F_{rs} \text{ of cross-correlation } I_{rs})^2 / (\text{Fourier transform } F_{rr} \text{ of autocorrelation } I_{rr} \text{ of the reference wave } S_r)$$

Also, the arithmetic processing component 132 can calculate at least of some information about the measurement object O based on power spectrum $|E_s|^2$ of the measurement wave Ss measured. The information are space information, energy structural information, refractive index, transmittance and reflective index.

[the second basic mode]

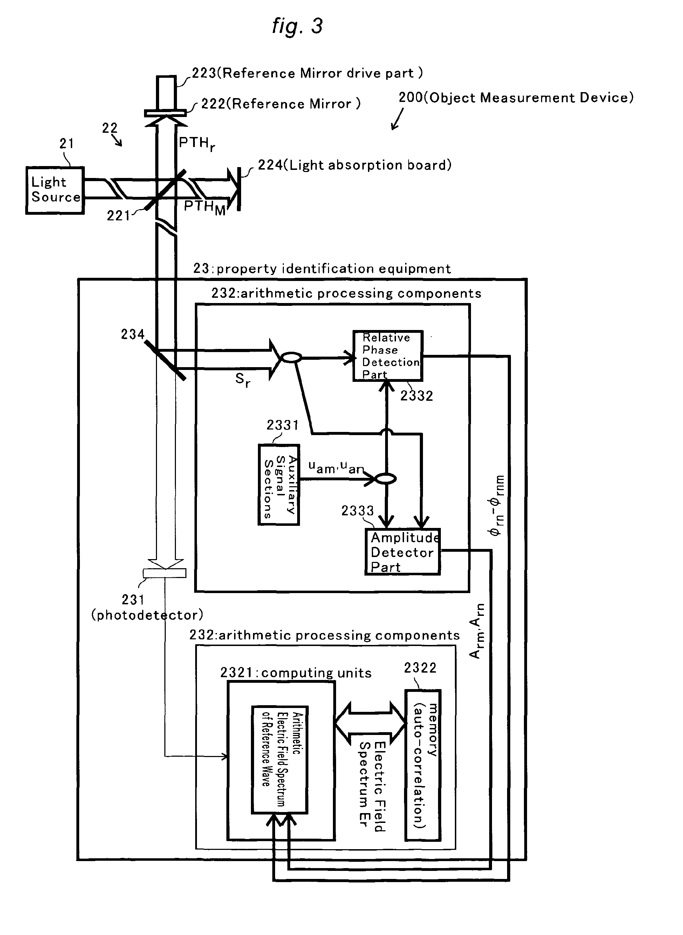

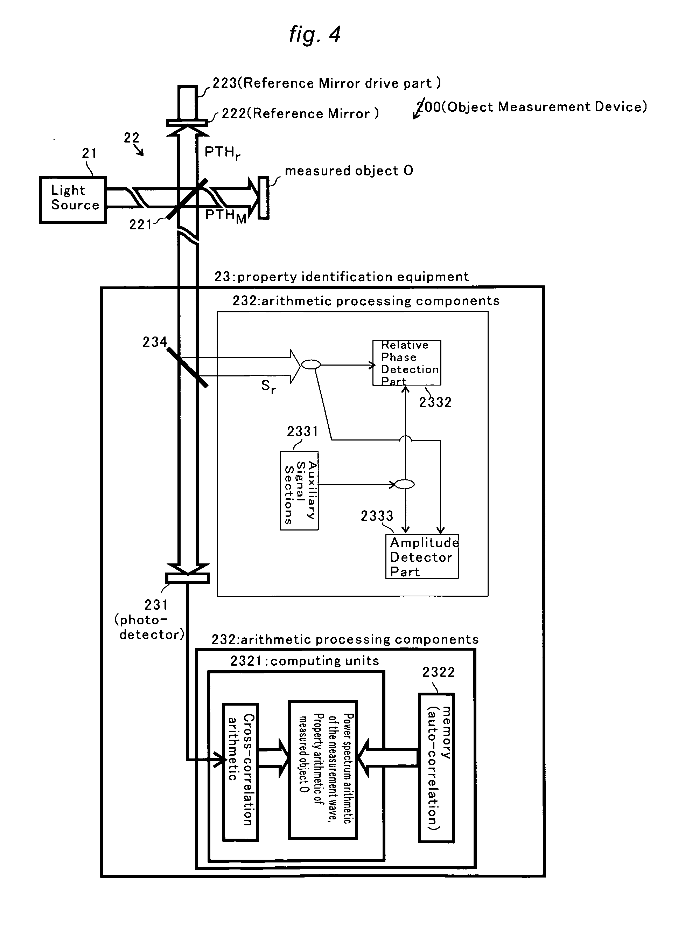

A second basic mode supports the spectrum measurement device of above (5), and the object measurement device of above (6).
The second basic mode of the present invention is described according to FIG. 3 and Fig. 4 for an example. In this mode the reference wave $S_r$ and the measurement wave $S_s$ describe are lights respectively.
As shown in FIG. 3 and FIG. 4, a object measurement device 200 comprises a source (a light source 21), an interferometer 22 and a property identification device 23.
A light emitted from the light source 21 is typically a broadband light such as a white light.
The interferometer 22 includes a beam splitter 221, a reference mirror 222 and a reference mirror drive 223 in this mode.
The reference wave path $PTH_r$ starts from the light source 21 and arrives at the reference mirror 222 through the beam splitter 221 and turns back the reference mirror 222 and further arrives at the property identification device 23 through the beam splitter 221.
As shown in FIG. 4, the measurement wave path $PTH_s$ starts from the light source 21 and arrives at the measuring object O through the beam splitter 221. And the measurement wave path $PTH_s$ turns back at the measurement object O and further arrives at the property identification device 23 through the beam splitter 221.
The property identification device 23 includes a facility as the spectrum measurement device, and consists of a photo detector 231, an arithmetic processing part 232, an electric field spectrum measurement part 233 and a beam splitter 234.
An electric field spectrum $E_r(\omega)$ of the reference wave $S_r$ is calculated based on the electric field spectrum measurement part 233.
The electric field spectrum measurement part 233 has an auxiliary signal part 2331, a relative phase detecting part 2332, an amplitude detecting part 2333 and a frequency selectivity part 2334.
The photo detector 231 detects only a reference wave $S_r$ to measure the electric field spectrum $E_r(\omega)$.
(for example, the reflected wave from the measurement object O does not arrive at the photo detector 231)
To achieve above, for example, the position of the measurement object O is provided with a light absorption board 224 as shown in FIG. 3.
The auxiliary signal generation part 2331 is constructed, for example, by a two wave length mode-locking broad band laser.
An auxiliary signal generation part 2331 generates two auxiliary signals $u_{am}$, $u_{an}$.
The frequency middle level of two auxiliary signals $u_{am}$, $u_{an}$ is set between the frequency of two reference wave components $s_{rm}$, $s_{rn}$ (frequency interval $\Delta\omega$).
The frequency interval of two auxiliary signals $u_{am}$, $u_{an}$ is the same as the frequency interval of two reference wave components $s_{rm}$, $s_{rn}$.
The relative phase detecting part 2332 generates a beat signal $BT_m$ (not shown) of a reference wave component $s_{rm}$ that frequency is low and an auxiliary signal $u_{am}$, and the relative phase detecting part 2332 generates a beat signal $BT_n$ (not shown) of a reference wave component $s_{rm}$ that frequency is high and an auxiliary signal $u_{am}$.
The relative phase detecting part 2332 generates multiplication signal of these two beat signals $BT_m$ and $BT_n$.
A constant to be decided by detection system is removed from DC component of the multiplication signal.
Relative phase $\varphi_{rn}-\varphi_{rm}$ of the reference wave components $s_{rm}$ and $s_{rn}$ is thereby detected.
Also, the magnitude detecting part 2333 can measure magnitude $A_{rm}$ of the reference wave component $s_{rm}$ from the beat signal $BT_m$ (not shown) of the auxiliary signal $u_{am}$ and the reference wave component $s_{rm}$, and the magnitude detecting part 2333 can measure the magnitude $A_{rn}$ of the reference wave component $s_{rn}$ from the beat signal $BT_n$ (not shown) of the auxiliary signal $u_{am}$ and the reference wave component $s_{rn}$.
The electric field spectrum measurement part 233 executes the process about a pair of a lot of the reference wave components $s_{rn}$ that frequency is different each other. The electric field spectrums $E_r(\omega)$ of the reference wave $S_r$ is measured as mentioned above.
This electric field spectrums $E_r(\omega)$ is stored in a memory 2322 of the arithmetic processing part 232.
On the other hand, in measurement of the measurement object O, the photo detector 231 receives a reference

wave $S_r$ and a measurement wave $S_s$ reflected from the measurement object O through the beam splitter 221 as shown in FIG. 4 (an interference wave).

The arithmetic processing component 232 comprises an arithmetic unit 2321 and the memory 2322.
The arithmetic unit 2321 includes facility to operate arithmetic of the cross-correlation.
The arithmetic unit 2321 receives an interference wave that the photo detector 231 detected as electrical signal.
The arithmetic unit 2321 calculates cross-correlation $I_{rs}$ from the reference wave $S_r$ and the measurement wave $S_s$.
The arithmetic unit 2321 executes Fourier transform $F_{rs}$ of cross-correlation $I_{rs}$ (it assumes Fourier transform).

The arithmetic unit 2321 can calculate electric field spectrum $E_s$ of the measurement wave $S_s$ based on electric field spectrum $E_r(\omega)$, and Fourier transform $F_{rs}$ is memorized in the memory 2322.
The complex conjugate $E_s^*$ of the electric field spectrum $E_s(\omega)$ of measurement wave Ss is represented by next expression.

$$E_s^* = (\text{Fourier transform } F_{rs} \text{ of cross-correlation } I_{rs})/(\text{electric field spectrum of reference wave } S_r)$$

The arithmetic processing component 232 can calculate at least one of some information of the measurement object O based on electric field spectrum $E_s(\omega)$ of measurement wave $S_s$.
These information are space information, energy structural information, refractive index, transmission factor and reflectance.

Note that, in sampling, it is necessary to sample by the time when it is shorter than time of $\lambda/2c$ according to "sampling theorem".
The sampling is executed according to "sampling theorem" in time that is shorter than $\lambda/2c$.

[the third basic mode]

A third basic mode supports the object measurement device of above (4) and (7).
According to the present invention, it is possible so that (or it advances time) has a characteristic to change in coarseness along the virtual line where the reference wave $S_r$ is perpendicular to the propagation direction in delay time.
Delay time of the reference wave $S_r$ gradually changes along virtual line which is perpendicular to propagation direction.

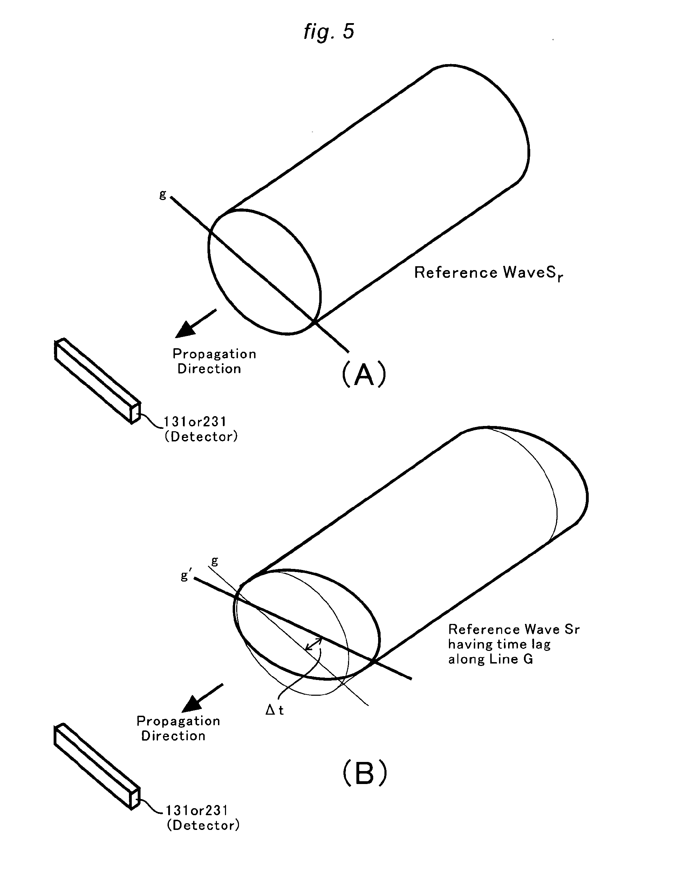

FIG. 5 (A), (B) are figures of image of time lag.
FIG. 5 (A) is a figure showing the reference wave $S_r$ before time lag occurs, and FIG. 5 (B) is a figure showing the reference wave $S_r$ after time lag produced.
In FIG. 5 (B), delay time $\Delta_t$ gradually changes along virtual line g which is perpendicular to propagation direction.
In this case, a property of depth direction at a point of the measurement object O is provided.
The photo detectors 131,231 are sensors comprising picture elements arranged in a single dimension.
Each of picture elements of the sensor detects light with information ($c\Delta_t$) corresponding to depth of the measurement object O.

Also, in the present invention, the delay time (or progress time) of the component along the X-direction of the virtual XY plane may gradually change.
The virtual XY plane is perpendicular to propagation direction of the reference wave $S_r$ wherein.

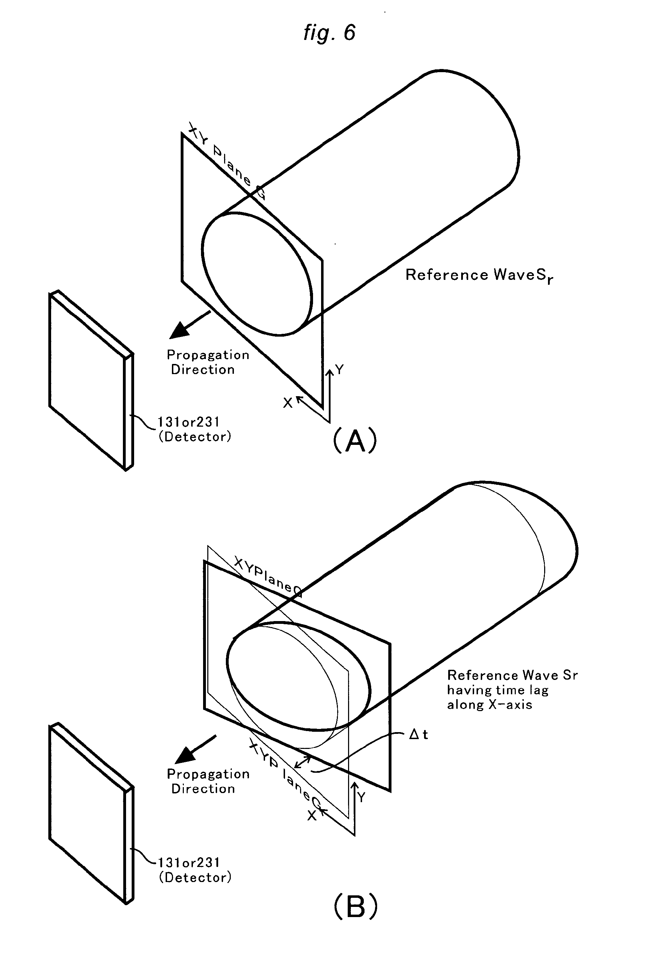

FIG. 6 (A), (B) are figures of image of time lag.
FIG. 6 (A) is a figure showing the reference wave $S_r$ before time lag occurs, and FIG. 6 (B) is a figure showing the reference wave $S_r$ after time lag occurs.
In FIG. 6 (B), delay time $\Delta_t$ gradually changes along virtual plane G which is perpendicular to propagation direction.
In this case, a property of depth direction of cut line of the measurement object O is provided.
The photo detectors 131,231 are sensors comprising picture elements arranged in two dimensions.
A picture elements group of the X-direction of the sensor detects light with information ($c\Delta_t$) corresponding to depth of the measurement object O in points corresponding to Y coordinate.

[application mode]

According to the present invention, the basic mode can be expanded.
That is, about the measurement object O of N layer, at least one of some information are measured.
These information are electric field spectrum $E_s(w)$, power spectrum $|E_s(\omega)|^2$, amplitude spectrum $A_s(w)$, phase spectrum $\varphi_s(\omega)$.
This applied mode supports the spectrum measurement device of above (8), (9), (12) and the object measurement device of (10) (11), (13), (14).
Explanation about these is described below.

EFFECT OF THE INVENTION

In the measurement of the measurement object having heterogeneous internal structure, when a general-purpose spectrum measurement device is used, spectrum information that complicated optical spectrum information is observed.

On the other hand, in a technique of the present invention, some property information depending on depth of the measurement object are measured with high resolution of several microns at the same time.

For example, these property information are space information, energy structural information, an refractive index, a transmission factor, reflectance.

Particularly, with the present invention, two-dimensional coaxial tomography is measured at frame rate of an image sensor.

Therefore, a tomogram measurement and a detection of optical spectrum information can be executed by real time.

In medical applications, a light coherence tomography is already put to practical use.

In the light coherence tomography, there is derived to measure a structure of internal organization by non-contact/non-aggression by light.

Inspection device to perform a tomogram measurement is already put to practical use, for funduscopy in part of ophthalmology, skin cancer inspection in department of dermatology, and inspection of the disease of the digestive system including stomach cancer in internal department.

However, expert experience and knowledge are necessary to determine diseases such as cancer from a shape.

According to the present invention, it can obtain spectrum information every system.

For example, the distinction of the cancer tissue can be executed objectively.

According to the present invention, multi-path reflection is performed in the reference side.

Measurement is thereby possible even if the measurement object is a long distance (e.g., dozens of meters) away from the measurement device.

BRIEF DESCRIPTION OF DRAWINGS

[FIG. 1]
FIG. 1 is a configuration diagram of first basic mode of the present invention. FIG. 1 shows a state to measure autocorrelation of reference wave.

[FIG. 2]
FIG. 2 is configuration diagram of the first basic mode of the present invention.
FIG. 2 shows reference wave and cross-correlation with the measurement wave, and shows the state that various spectra of measurement wave and property of a measurement object are measured.

[FIG. 3]
FIG. 3 is a configuration diagram of second basic mode of the present invention, and FIG. 3 shows a state to measure the electric field spectrum of reference wave.

[FIG. 4]
FIG. 4 is a configuration diagram of second basic mode of the present invention.
FIG. 4 shows a reference wave and the cross-correlation with the measurement wave.
FIG. 4 shows a state to measure property of various spectra of measurement wave and a measurement object.

[FIG. 5]
FIG. 5 is image explanatory drawing.
When property of a measurement object is measured about point depth, state that reference wave delays is shown.
FIG. 5 (A) shows a reference wave before time lag occurs.
FIG. 5 (B) shows a reference wave after time lag occurred.

[FIG. 6]
FIG. 6 is image explanatory drawing.
When property of a measurement object is measured about line depth, state that reference wave delays is shown.
FIG. 6 (A) shows a reference wave before time lag occurs.
FIG. 6 (B) shows a reference wave after time lag occurred.

[FIG. 7]

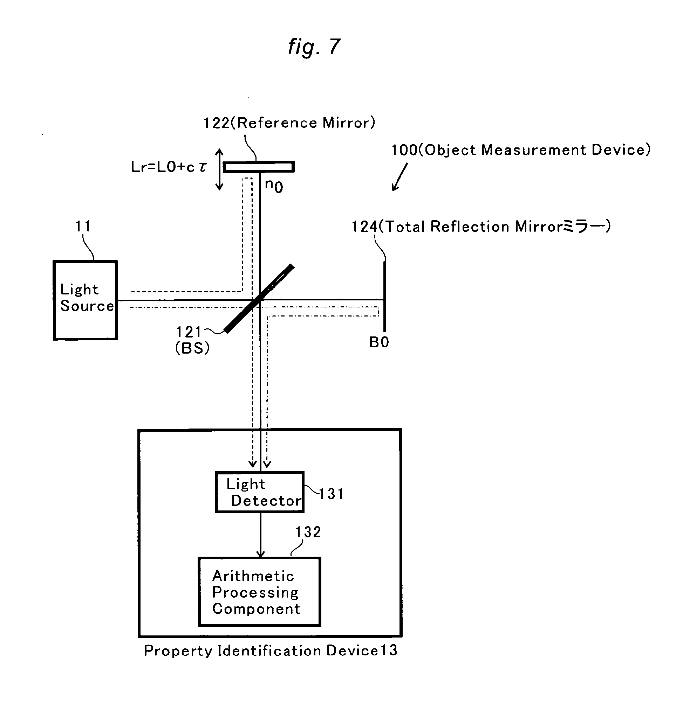

FIG. 7 is configuration diagram of first embodiment of the present invention.
FIG. 7 is a figure showing states to measure the autocorrelation of reference wave, and a total reflection mirror is set at the position of the measurement object.

[FIG. 8]

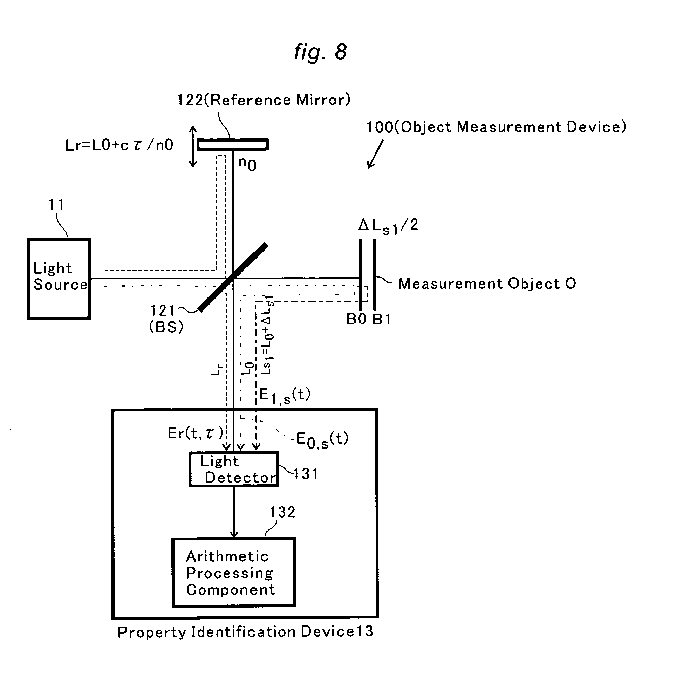

FIG. 8 is a configuration diagram of first embodiment of the present invention, and a measurement object has two boundary surfaces.

By measurement device of FIG. 8, cross-correlation of reference wave and measurement wave is measured.

By measurement device of FIG. 8, various spectra of measurement wave and property of a measurement object are measured.

[FIG. 9]

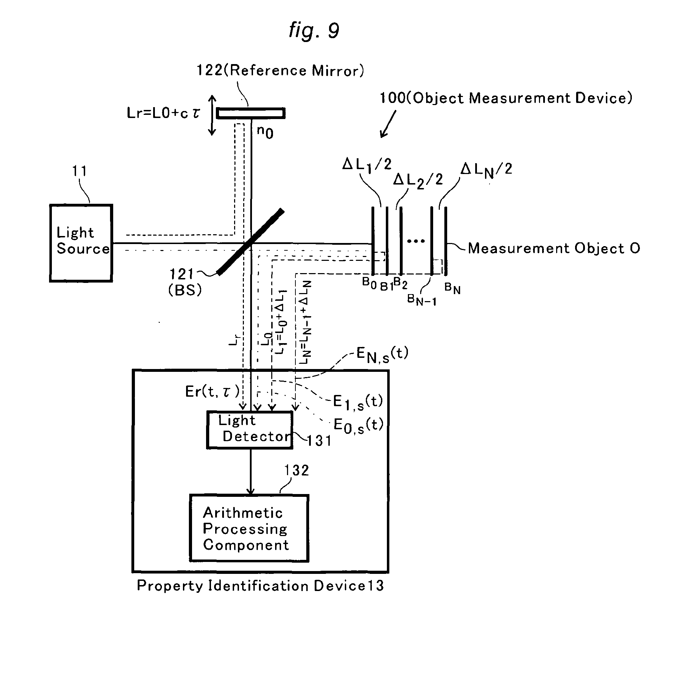

FIG. 9 is a configuration diagram of first embodiment of the present invention, and a measurement object has a plurality of borders surfaces.

By measurement device of FIG. 9, cross-correlation of reference wave and measurement wave is measured.

By measurement device of FIG. 9, various spectra of measurement wave and property of a measurement object are measured.

[FIG. 10]

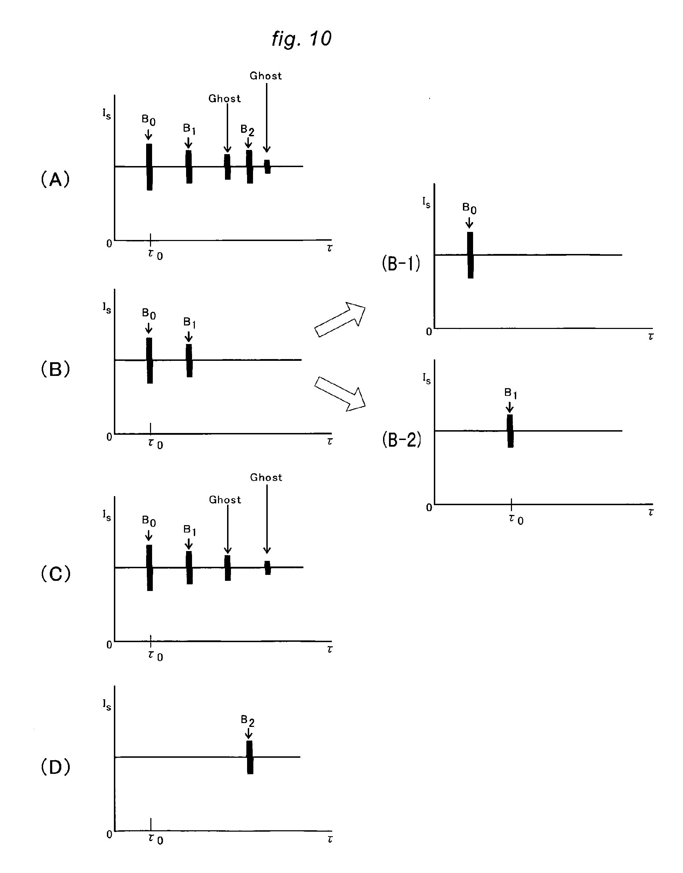

FIG. 10 is a figure showing first constitutional example of second embodiment of the present invention.

FIG. 10 shows an embodiment of an object measurement device of FIGS. 3 and 4.

[FIG. 11]

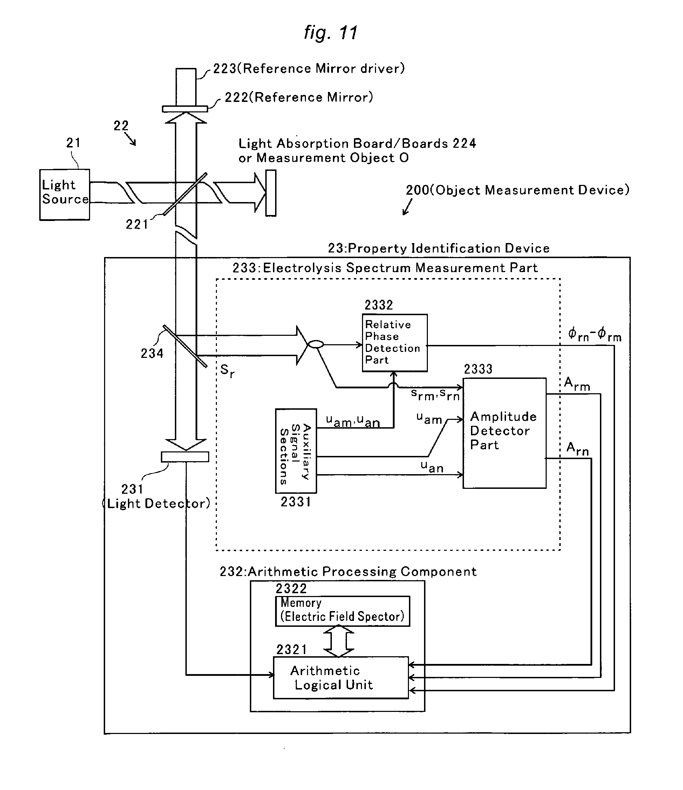

FIG. 11 is figure showing relative phase detecting part and magnitude detecting part in first constitutional example of FIG. 10.

[FIG. 12]

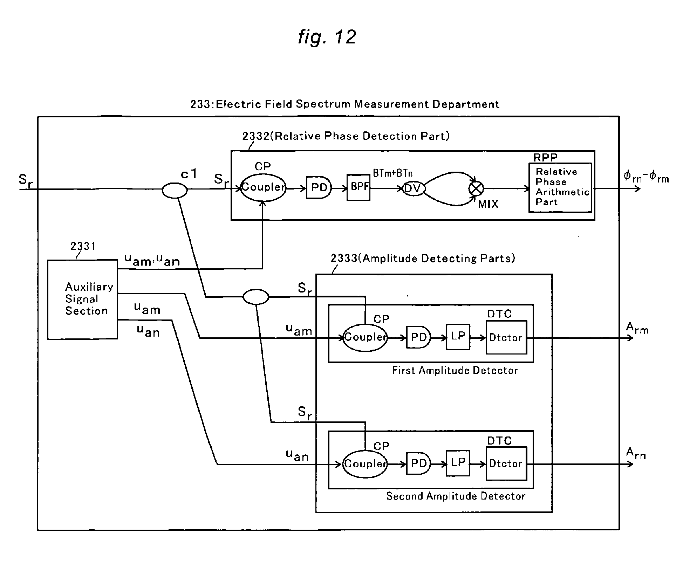

FIG. 12 is a figure showing second constitutional example of second embodiment of the present invention.

FIG. 12 shows an embodiment of an object measurement device of FIGS. 3 and 4.

[FIG. 13]

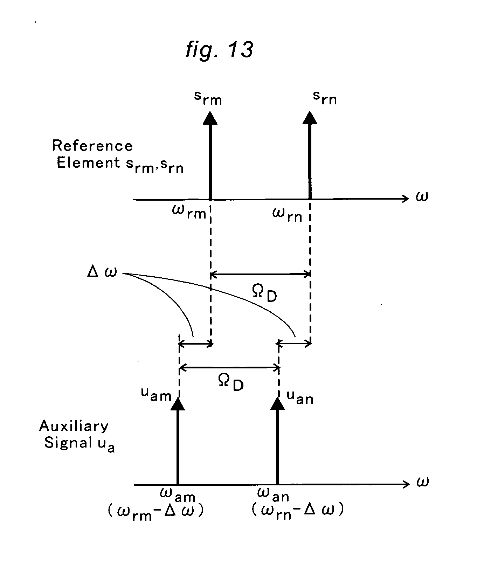

FIG. 13 is figure showing relative phase detecting part and magnitude detecting part in second constitutional example of FIG. 12.

[FIG. 14]

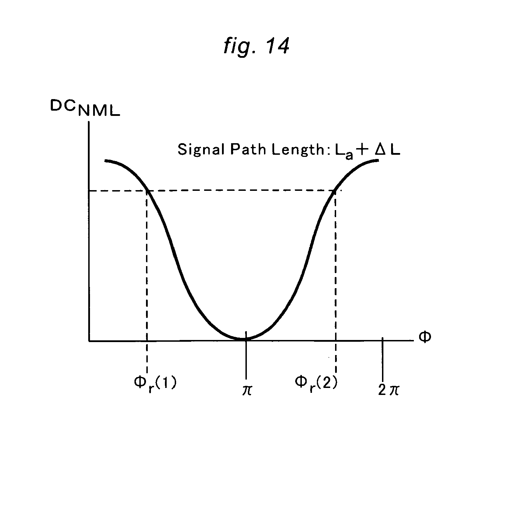

FIG. 14 is a figure showing relations of frequency of auxiliary signal and frequency of reference wave component in second embodiment of the present invention.

[FIG. 15]

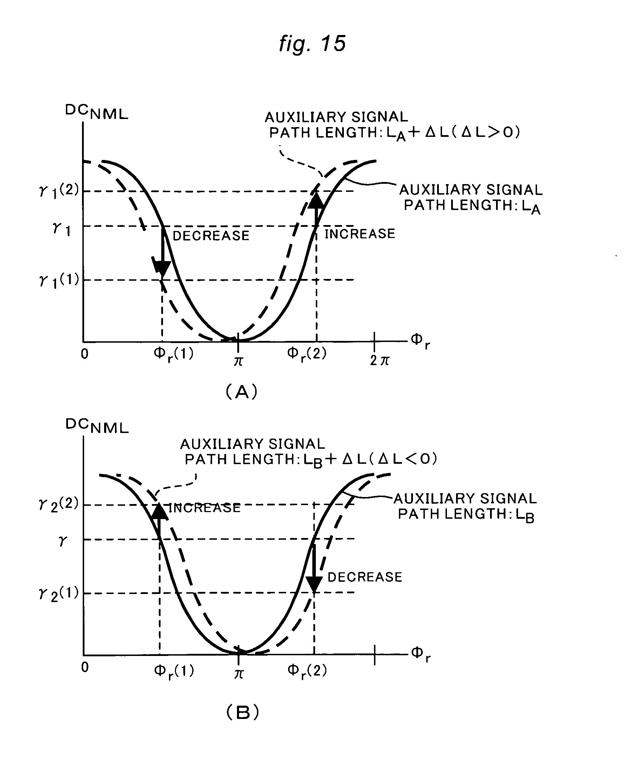

FIG. 15 is figure showing relationships between normalized DC and relative phase in second embodiment of the present invention.

[FIG. 16]

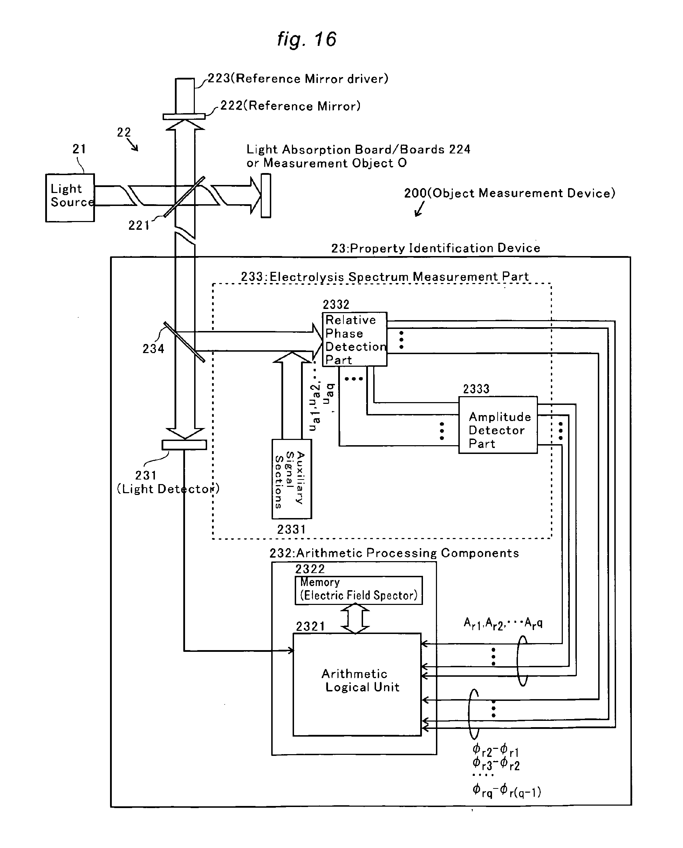

FIG. 16 is explanatory drawing showing the methods to determine "true relative phase" from two normalized DC components in second embodiment of the present invention.

[FIG. 17]

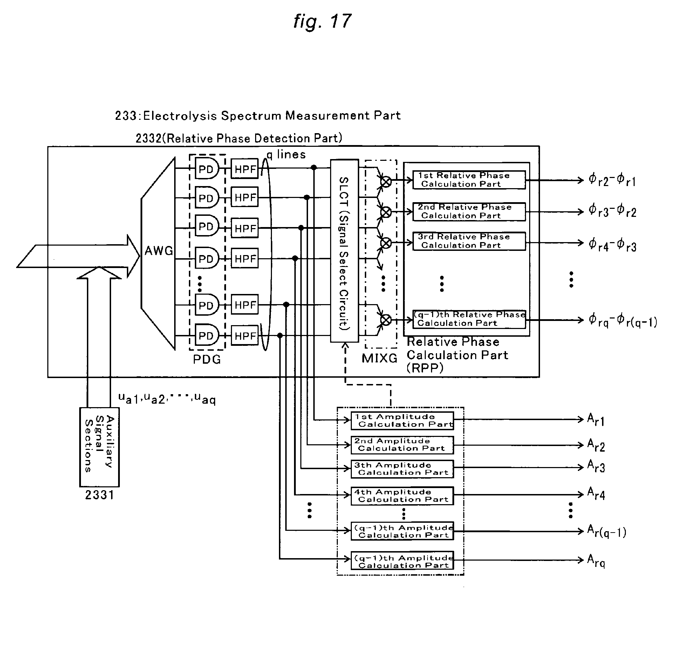

FIG. 17 is explanatory drawing of first constitutional example (a Mach-Zehnder type) of an interferometer used in the present invention.

[FIG. 18]

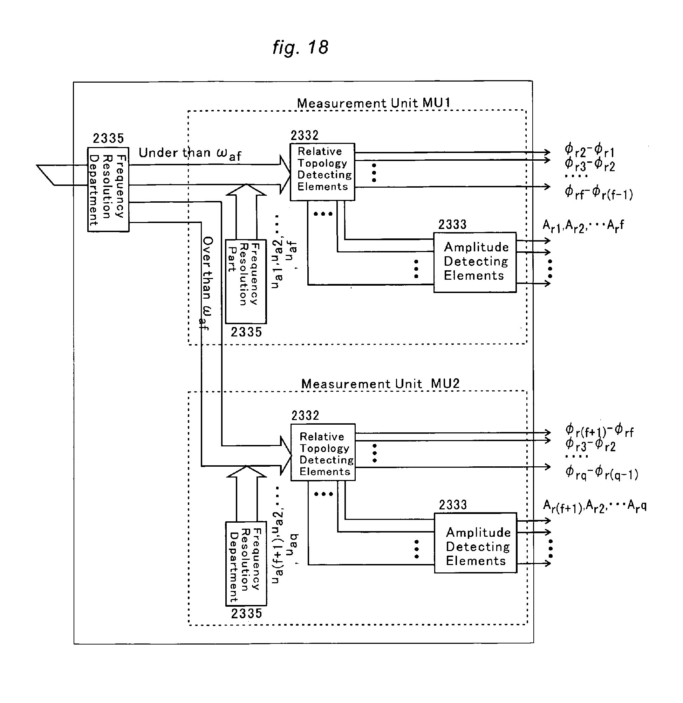

FIG. 18 is a figure showing a modulator used in an interferometer shown in FIG. 17.

[FIG. 19]

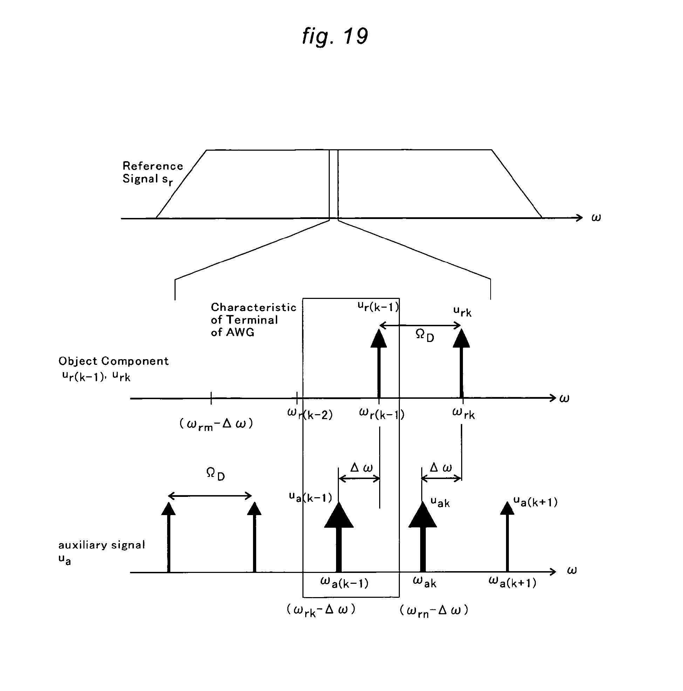

FIG. 19 is explanatory drawing of second constitutional example (a Mach-Zehnder type) of an interferometer used in the present invention.

[FIG. 20]

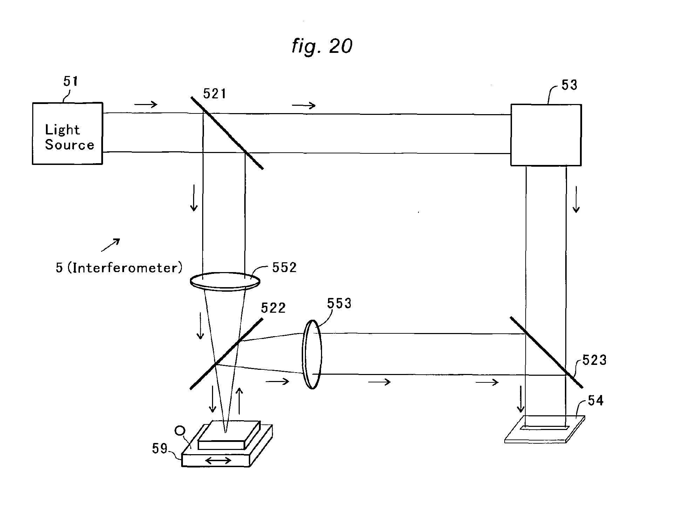

FIG. 20 is a figure showing a modulator used in an interferometer shown in FIG. 19.

[FIG. 21]

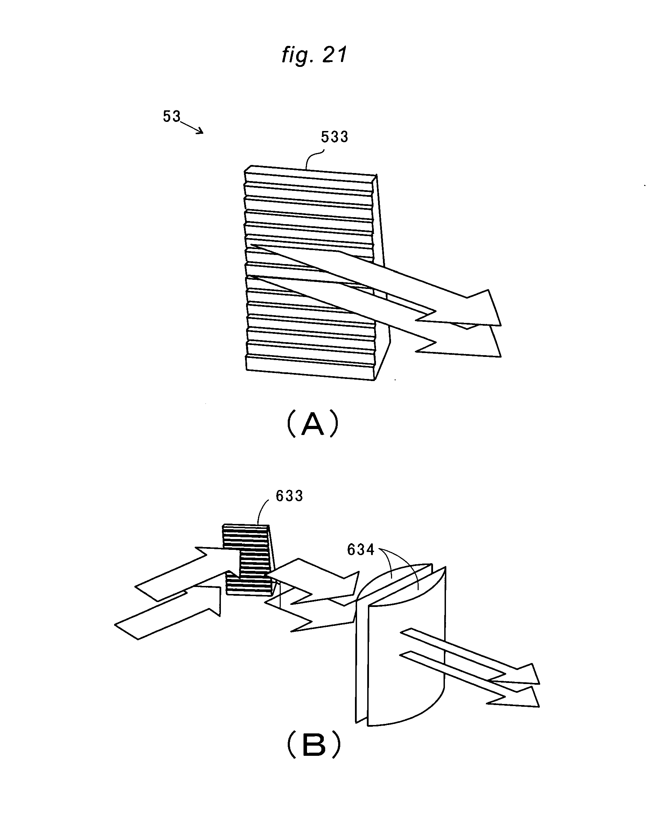

FIG. 21 is explanatory drawing of third constitutional example (a Mach-Zehnder type) of an interferometer used in the present invention.

[FIG. 22]

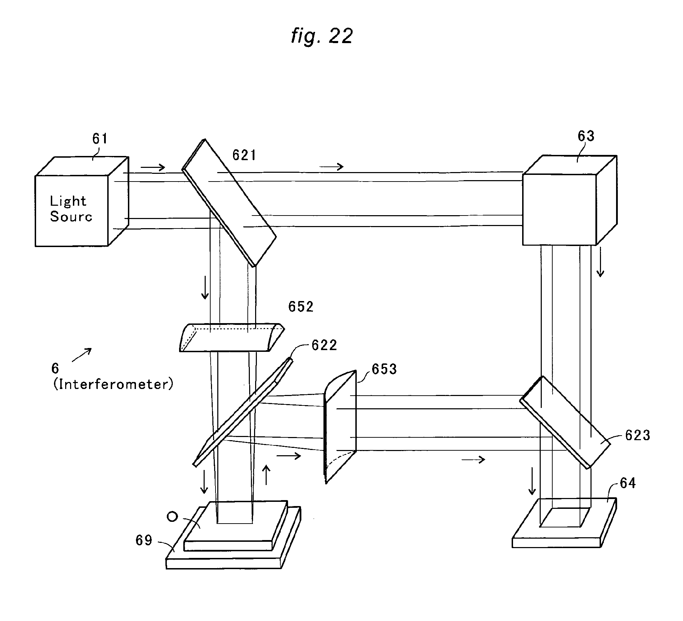

FIG. 22 is explanatory drawing of fourth constitutional example (a Mach-Zehnder type) of an interferometer used in the present invention.

[DESCRIPTION OF THE PREFERRED EMBODIMENT]

Embodiments of the present invention are described below.
Note that, in the present embodiment, "light" is used as "a wave".
"The source" in the present invention is replaced with "a light source".

[first embodiment]

A first embodiment of the object measurement device 100 of the present invention is explained by FIG. 7, FIGS.

8 and 9.

In this embodiment, power spectrum, phase or others are measured based on autocorrelation of the reference wave $S_r$ and cross-correlation of a reference wave $S_r$ and a measurement wave $S_s$.

Even more particularly, space information, energy structural information, refractive index, transmission factor, reflectance or others of a measurement object are acquired.

[1] Autocorrelation is derived by setting a total reflection mirror in a measurement object position. By executing Fourier transform of autocorrelation, a power spectrum of the measurement light is derived.

[2] The measurement object O is set in a measurement object position. Acquired cross-correlation is executed Fourier transform.

[3] Based on Fourier transform of autocorrelation and Fourier transform of cross-correlation, power spectrum of the measurement object, phase or others are derived.

Some information are measured.

[1] Deriving of autocorrelation, execution of the Fourier transform of the autocorrelation, and deriving of power spectrum of reference light

As shown in FIG. 7, the total reflection mirror 124 is installed in the measurement object position.

Interference light (autocorrelation $I_{rr}$ (t)) is measured.

A power spectrum of the reference wave $S_r$ is got by Fourier transform of autocorrelation $I_{rr}$ (t).

(A) Fourier transform of autocorrelation of a reference light is an electric field spectrum.

This is proved below.

In an interferometer 12, Fourier transform of the autocorrelation is a power spectrum of a light source 11.

This is inspected below.

It supposes a power spectrum of the light source 11 to be $|A(\omega)|^2$ (it may write down with $A(\omega)^2$ as follows)

The electric field $E_r$ (t, $\tau$) of the reference wave $S_r$ output from the interferometer 12 is represented by expression (1).

$$E_r(t,\tau) = [A(\omega)/2^{1/2}]\exp[j\{\omega t - (n_0\omega L_r/c)\}]\ \ \ldots\ (1)$$

no: reference path

$PTH_r$: an refractive index in measurement path $PTH_s$

c: light velocity

$L_r$: an optical path length (a path length of reference wave path $PTH_r$) of the reference wave $S_r$

$\tau$: Time displacement when position of a reference mirror changed

On the other hand, reflect light (measurement wave $S_s$) from the total reflection mirror 124 is output from the interferometer 12.

Electric field $E_{mirr}$ (t) of measurement wave $S_s$ is represented by an expression (2).

$$E_{mirr}(t)$$
$$= [A(\omega)/2^{1/2}]\exp[j\{\omega t - (n_0\omega L_s/c)\}]\ \ \ldots\ (2)$$

$L_s$: optical path length of measurement wave $S_s$ (optical path length of measurement wave path $PTH_s$)

Electric field $E_r(t,\tau)$ of reference wave $S_r$

Electric field $E_{mirr}(t)$ of measurement wave $S_{mirr}$

Interference output $I_{rr}$ (t) of $E_r$ (t,$\tau$) and $E_{mirr}(t)$ is referred to by an expression (3).

$$I_{rr}(t)=A(\omega)^2+A(\omega)^2\exp[j\{[-(n_0\omega/c)(L_r-L_s)\}]$$
$$=A(\omega)^2+A(\omega)^2\exp(j\omega\tau) \ \ ... \ \ (3)$$

$I_{rr}(t)$ is a sine (or cosine) wave. And Fourier transform of this change component is represented by an expression (4).
$$A(\omega)A(\omega)^*=A(\omega)^2 \ \ ... \ \ (4)$$

$A(\omega)^*$: complex conjugate of $A(\omega)$
$A(\omega)$ meets Wiener Khinchin theorem. That is, interference light gives autocorrelation $I_{rr}(t)$.
Electric field spectrum $E_{rr}(\omega)$ is provided from Fourier transform $F[I_{rr}(t)]$ of $I_{rr}(t)$ as shown by expression (5).

$$E_{rr}(\omega)=F[I_{rr}(t)] \ \ ... \ \ (5)$$

(B) In this embodiment, at first interference light (autocorrelation $I_{rr}(t)$) is measured.
Then, Fourier transform of $I_{rr}(t)$ is demanded.
Fourier transform of $I_{rr}(t)$ is power spectrum of the reference wave $S_r$ so that it was proved in (A).

[2] The acquisition of the cross-correlation, Fourier transform of the cross-correlation and acquisition of electric field spectrum of measurement light
As shown in FIG. 8, the measurement object O is set at the position of the total reflection mirror 124 of FIG. 7.

As shown in FIG. 8, the reference mirror 122 of the interferometer 12 is scanned (delay time: $\tau$).
Interference of reference wave $S_r$ and measurement light (reflect light) from the measurement object O is thereby measured.
The measurement object O has two boundary surface $B_0$, $B_1$ which are adjacent at intervals of $\Delta L_{s1}/2$.
An optical path length (an optical path of first measurement path $PTH_{s1}$ to turn back in boundary surface $B_0$) of measurement wave $S_{s1}$ from boundary surface $B_0$ is $L_0$.
The optical path length (a path length of second measurement path $PTH_{s2}$ to turn back in a boundary surface $B_1$) of the reflect light (measurement wave $S_{s2}$) of the boundary surface $B_1$ is $L_{s1}$ (= $L_0+\Delta L_{s1}$).
On the other hand, the optical path of the reference wave $S_r$ is represented by the next expression as previously described.

$$L_r=L_0+(c/n_0)\tau$$

Also, space between boundary surface $B_0$ and $B_1$ is filled with a material of refractive index (a complex number) $n_1(\omega)$.
refractive index of space except the measurement object O is constant no which does not almost depend on wave length like air.
Also, the amplitude reflectance in boundary surface $B_0$ and $B_1$ is represented in $r_{s0+}$, $r_{s0-}$, $r_{s1+}$, respectively.
The amplitude transmittance in boundary surface $B_0$ and $B_1$ is represented in $t_{s0+}$, $t_{s0-}$, $t_{s1+}$, respectively.
"+" represents an incident direction, and "-" represents a return direction wherein.
However, $|r_{s0+}|=<1$, $|r_{s0-}|=<1$, $0=<t_{s0+}=<1$, $0=<t_{s0-}=<1$, $|r_{s1+}|=<1$, $0=<t_{s1+}=<1$.
Electric field waveform of reference wave $S_r$ of this case is represented by expression (6)(it is the same with expression (1)).

$$Er(t, \tau)$$
$$= [A(\omega)/2^{1/2}]\exp[j\{\omega_t - (n_0\omega L_r/c)\}])$$
$$= [A(\omega)/2^{1/2}]\exp[j\{\omega_t - (n_0\omega L_0/c) + \omega_\tau\}] \quad \ldots \quad (6)$$

On the other hand, electric field $E_{s0}(t)$ of the reflect light (measurement wave $S_s1$) from the measurement object O is represented by an expression (7).

On the other hand, electric field $E_{s0}(t)$ and $E_{s1}(t)$ of two reflect light (measurement wave $S_{s1}$, $S_{s2}$) from the measurement object O are represented by an expression (7) and an expression (8), respectively.

$$E_{s0}(t) = [r_{s0+}A(\omega)/2^{1/2}]\exp[j\{\omega t - (n_0\omega L_0/c)\}]) \quad \ldots \quad (7)$$

$$E_{s1}(t) = [(t_{s0+}t_{s0-}r_{s0+})A(\omega)/2^{1/2}]$$

$$\exp[j\{\omega t - (n_0\omega L_0/c) - (n_1(\omega)\omega\Delta L_{s1}/c)\}]) \quad \ldots \quad (8)$$

When a low coherence the light source is used, $E_{s0}(t)$ and $E_{s1}(t)$ do not interfere if $\Delta L_{s1}$ is longer than coherence length.

Thus two next interference is examined.

(A) Interference of electric field $E_r(t,\tau)$ of the reference wave $S_r$ and electric field $E_{s0}(t)$ of the reflect light (measurement wave $S_{s1}$).

(B) Interference of electric field $E_r(t,\tau)$ of reference wave $S_r$ and electric field $E_{s1}(t)$ of reflect light (measurement wave $S_{s2}$).

(A) Examination of the interference of reference wave $S_r$ and measurement wave Ss1

The reference wave $S_r$ which is detected with the photo detector 131 and reflected wave (measurement wave $S_{s0}$) interference output $I_{r(s0)}(\tau)$ from boundary surface $B_0$ are represented by expression (9).

$$I_{r(s0)}(\tau) = A(\omega)^2/2 + r_{s0+}^2 A(\omega)^2/2$$
$$+ r_{s0+}A(\omega)^2\cos\{-(n_0\omega(L_0-L_r)/c)\}$$

$$L_r = L_0 + c\tau/n_0$$

An expression (9) is derived from above formulas.

$$I_0(\tau) = A(\omega)^2/2 + r_{s0+}^2 A(\omega)^2/2 + r_{s0+}A(\omega)^2\cos(\omega\tau) \quad \ldots \quad (9)$$

Expression (9) is sine wave, and magnitude is provided by Fourier transform of change component of expression (9). The magnitude is represented by an expression (10).

$$\{|r_{s0+}|^2 A(\omega)^2\} * \delta(\omega) = |r_{s0+}|A(\omega)^2 \quad \ldots \quad (10)$$

Thus, an expression (11) is derived from an expression (10) and an expression (4).

$$F[I_0(\tau)]^2/F[I_{rr}(\tau)]=\{r_{s0+}{}^2A(\omega)^4\}/A(\omega)^2$$
$$=r_{s0+}{}^2A(\omega)^2 \dots \quad (11)$$

The expression (11) is power spectrum of reflect light (measurement wave $S_{s1}$) of boundary surface $B_0$.
The loss for the reflection coefficient is given to expression (11).
(B) Examination of the interference with reference wave $S_r$ and the reflect light (measurement wave $S_{s2}$)
On the other hand, in this example, a case with absorption is assumed by a sample.
Complex refractive index $n_{s1}(\omega)$ is represented by an expression (12).
In an expression (12), refractive index $n_{s1}{}^{re}(\omega)$ and absorption coefficient $c/\omega\{n_{s1}{}^{im}(\omega)\}$ are used.

$$n_{s1}(\omega) = n_{s1}{}^{re}(\omega) +jc/\omega \{n_{s1}{}^{im}(\omega)\} \dots \quad (12)$$

In using expression (12), interference output Is of reference wave $S_r$ and reflect light (measurement wave $S_{s2}$) from boundary surface $B_1$ is represented by expression (13).
$$I_{r(s1)}(\tau)=A(\omega)^2/2+(t_{s0+}t_{s0-}r_{s1+})^2A(\omega)^2/2$$
$$+(t_{s0+}t_{s0-}r_{s1+})^2A(\omega)^2$$

$$\cos\{\omega t-(n_0\omega L_0/c)-(n_1(\omega)\omega\Delta L_{s1}/c)-(n_0\omega L_r/c)\}$$

The relational expression $L_r=L_0+c\tau/n_0$ and an expression (10) are used.
$I_{r(s1)}(\tau)$ is represented by the next expression.

$$I_{r(s1)}(\tau)=A(\omega)^2/2+(t_{s0+}t_{s0-}r_{s1+})^2A(\omega)^2/2+(t_{s0+}t_{s0-}r_{s1+})^2A(\omega)^2$$

$$[(t_{s0+}t_{s0-}r_{s1+})A(\omega)^2\exp\{-n_{s1}{}^{im}(\omega)\Delta L_{s1}\}]$$

$$\cos(\omega_\tau)*\cos(-n_{s1}{}^{re}(\omega)\Delta L_{s1}/c) \dots \quad (13)$$

The change component of the expression (13) is executed Fourier transform, and magnitude As is got by an expression (14).
Also, phase $\varphi_s$ is got by an expression (15).

$$A_s(\omega)=[(t_{s0+}t_{s0-}r_{s1+})A(\omega)^2\exp\{-n_{s1}{}^{im}(\omega)\Delta L_1\}] \dots \quad (14)$$

$$\varphi s(\omega)=-n_{s1}{}^{re}(\omega)\Delta L_{s1}/c \dots \quad (15)$$

The power spectrum of reflect light $E_2$ is got as expression (16). $F[I_s(\tau)]^2/F[I_{rr}(\tau)]=(t_{s0+}t_{s0-}r_{s1+})^2A(\omega)^2\exp\{-2n_{s1}^{im}(\omega)\Delta L_{s1}\}$ ... (16) That is, the expression (16) means that original spectrum damps according to wavelength dependence of the absorption coefficient and thickness.

Even more particularly, magnitude $A_1(\omega)$ of expression (14) is divided by power spectrum of the original light source, and logarithmic calculation is executed.

From the real part (expression (17) ), extreme absorption spectrum proportional to distance is provided.

Also, from imaginary part (expression (18)), refractive index is provided.

$$n_{s1}{}^{re}(\omega)=-\varphi_s(\omega)*c/(\omega\Delta L_{s1}) \quad ... \quad (17)$$

$$n_{s1}{}^{im}(\omega)=(1/\Delta L_{s1})\log_e[A_1(\omega)/\{(t_{s0+}t_{s0-}r_{s1+})A(\omega)^2\}] \quad ... \quad (18)$$

Even more particularly, $n_{s1}{}^{re}(\omega)$ may resemble $n_{s1}{}^{re}$.

$n_{s1}{}^{re}$ does not depend on the wave length.

In this case, group delay is provided.

That is, phase $\varphi_1(\omega)$ of expression (13) is differentiated by $\omega$. And degree of leaning of phase spectrum is calculated.

$$d\varphi_1(\omega)/d\omega=-n_{s1}{}^{re}\Delta L_{s1} \quad ... \quad (19)$$

The expression (19) shows that horizontal scale $\tau$ of the correlative waveform is displaced from a waveform provided from boundary surface $B_0$.

This means that a cross-correlation waveform is measured in absence of absorption by a sample.

In FIG. 9, the measurement object O comprises boundary surfaces ($B_0$, $B_1$, ...., $B_N$) three or more.

Measurement of the measurement object O of FIG. 9 are described below.

In this measurement, interference wave as shown in FIG. 10 (A) is measured.

At first in this case interference waveform (cf. position $\tau_0$ in time base $\tau$) reflected in boundary surface $B_0$ is determined as shown in FIG. 10 (B) (cf. (B-1)).

With this, an interference waveform reflected in boundary surface $B_1$ is determined (cf. (B-2)).

Then, as shown in FIG. 10 (C), a ghost (for example, a plurality of interference waveforms) by the multiple reflection to produce between boundary surfaces $B_0$ and $B_1$ is estimated (it is acquired or it is assigned) based on these interference waveforms.

Then, as shown in FIG. 10 (D), a reflected wave that was reflected back in boundary surfaces $B_0$ and $B_1$ and a ghost by the multiple reflection which occurred between boundary surface $B_0$ and $B_1$ are removed by an interference waveform detected by arithmetic.

Interference waveform which is nearest to $\tau_0$ is estimated (acquired or assigned) as follows by the rejection result.

This interference waveform is reflected wave from boundary surface $B_3$ and an interference waveform reflected once.

Like the above, interference waveform from boundary surface $B_3$, $B_4$, $B_5$, ..., $B_N$ is estimated.

[second embodiment]

The second embodiment of object the measurement device 200 of the present invention is explained from FIG. 10 by FIG. 16.

In the first embodiment, the total reflection mirror 124 was set at the position of the measurement object O.

And reference wave $S_r$ was measured, and interference light (autocorrelation $I_{rr}(\omega)$) was executed Fourier transform of, and electric field spectrum $E_r(\omega)$ was provided.

However, the total reflection mirror 124 is not used in the present embodiment, and electric field spectrum $E_r(\omega)$ of the reference wave $S_r$ is got directly.

That is, in the present embodiment, electric field spectrum of reference wave $S_r$ is demanded.

Electric field spectrum of measurement wave $S_s$ is got from the electric field spectrum and cross-correlation of reference wave $S_r$ and measurement wave $S_s$.

And space information, energy structural information, an refractive index, a transmission factor, reflectance of the measurement object are acquired.

<First constitutional example>

In FIG. 10, a object measurement device 200 is the object measurement device 200 which illustrated by FIG. 3 and FIG. 4.

The property identification device 23 becomes from the photo detector 231, the arithmetic processing component 232, the electric field spectrum measurement part 233 and the beam splitter 234.

It changes the combination of the reference wave component and, in FIG. 10, executes the process that the property identification device 23 detects relative phase and magnitude serially (it takes a serial step).

In FIG. 10, the property identification device 23 chooses two reference wave components $S_{rm}$, $S_{rn}$ (typically n=m+1) in reference wave reference wave component $S_{r1}$, $S_{r2}$, ..., $S_{rq}$ (arranged in low order of the frequency) included in $S_r$.

The electric field spectrum measurement part 233 comprises auxiliary signal generation part 2331, relative phase detecting part 2332, magnitude detecting part 2333 and frequency selectivity region 2334 in this constitutional example as illustrated by FIG. 3 and FIG. 4.

Also, the arithmetic processing component 232 comprises arithmetic unit 2321 and the memory 2322.

In this constitutional example, electric field spectrum $E_r$ ($\omega$) of reference wave $S_r$ can be measured by the electric field spectrum measurement part 233.

In this case, the light absorption board 224 is set at position of the measurement object O, and the photo detector 231 detects only reference wave $S_r$.

And electric field spectrum measurement part 233 takes reference wave $S_r$ through the beam splitter 234.

Frequency selectivity part 2334 selects two reference wave components from a plurality of reference wave components $s_{r1}$, $s_{r2}$, ..., $s_{rq}$ which frequency is different.

A plurality of reference wave components $s_{r1}$, $s_{r2}$, ..., $s_{rq}$ are included in reference wave $S_r$ as a frequency component. The selected reference wave components are defined in $s_{rm}$, $s_{rn}$. Note that the reference wave components $S_{r1}$, $S_{r2}$, ..., $S_{rq}$ can be determined as discrete value optionally.

Components $s_{rm}$, $s_{rn}$ are two reference wave components which frequency was next to.

Auxiliary signal generation part 2331 generates two auxiliary signals $u_{am}$, $u_{an}$ where middle value of the frequency was set between frequency of reference wave components $s_{rm}$, $s_{rn}$.

The frequency interval of two auxiliary signals $u_{am}$, $u_{an}$ are the same as a frequency interval of two reference wave components $s_{rm}$, $S_{rn}$.

Relative phase detecting part 2332 detects relative phase of reference wave components $s_{rm}$, $s_{rn}$ from reference wave components $s_{rm}$, $s_{rn}$ and auxiliary signal $u_{am}$, $u_{an}$.

The amplitude detecting part 2333 detects an amplitude $A_{rm}$ of the reference wave component $s_{rm}$ from the reference wave components $s_{rm}$, $s_{rn}$ and the auxiliary signal $u_{am}$ , and detects the amplitude $A_{rn}$ of the reference wave component $s_{rn}$ from the reference wave component $S_{rm}$, $S_{rn}$ and the auxiliary signal $u_{am}$.

The magnitude detecting part 2333 detects the magnitude $A_{rm}$ of the reference wave component $s_{rm}$ from the reference wave components $s_{rm}$, $s_{rn}$ and the auxiliary signal $u_{am}$.

The magnitude detecting part 2333 detects the magnitude Arn of the reference wave component $s_{rn}$ from the reference wave components $s_{rm}$, $s_{rn}$ and the auxiliary signal $u_{an}$.

The detection of these relative phase and the detection of the magnitude are performed about a group of the large number of the reference wave components $s_{rm}$, $s_{rn}$.

The arithmetic unit 2321 takes these detection results sequentially and records to the memory 2322.

The arithmetic unit 2321 can operate electric field spectrum $E_r(\omega)$ of reference wave $S_r$ based on these record results.

And it measures cross-correlation with the reference wave $S_r$ and the measurement wave $S_s$ as having illustrated by FIG. 4 and can derive electric field spectrum $E_r$ ($\omega$) of the measurement wave $S_s$.

Because this cross-correlation is executed Fourier transform of, electric field spectrum $E_r$ ($\omega$) of measurement wave $S_s$ is got, and various kinds of properties of the measurement object O are measured.

Configuration of the relative phase detecting part 2332 and configuration of the magnitude detecting part 2333 are shown in FIG. 11.

The relative phase detecting part 2332 consists of an coupler(CP), a photo diode (PD), band pass filter (BPF), a divider (DV), a mixer (MX) and the relative phase arithmetic logical unit (RPP).

In this constitutional example, the reference wave component $s_{rm}$ is represented by expression (33), and the reference wave component $s_{rn}$ is represented by expression (34).

$$s_{rm} = A_{rm} \exp\{j(\omega_{rm}t - \varphi_{rm})\} \quad \cdots \quad (33)$$

$$s_{rn} = A_{rn} \exp\{j(\omega_{rn}t - \varphi_{rn})\} \quad \ldots \quad (34)$$

$A_{rm}$ is magnitude of $s_{rm}$, $\omega_{rm}$ is frequency of $s_{rm}$ and $\varphi_{rm}$ is a phase of $s_{rm}$.

$A_{rn}$ is magnitude of $s_{rn}$, $\omega_{rn}$ is frequency of $s_{rn}$ and $\varphi_{rn}$ is a phase of $s_{rm}$.

$\varphi_{rn}$-$\varphi_{rm}$ is unknown value.

Note that one of ($\varphi_{rm}$ and $\varphi_{rn}$ may be known. However, both of $\varphi_{rm}$ and $\varphi_{rn}$ are usually unknown.

The auxiliary signal $u_{am}$ which the auxiliary signal generation part 2331 generates may be represented by expression (35). The auxiliary signal $u_{an}$ which the auxiliary signal generation part 2331 generates may be represented by expression (36).

$$u_{am} = A_{am} \exp\{j(\omega_{am}t - \varphi_{am})\} \quad \ldots \quad (35)$$

$$u_{am} = A_{an} \exp\{j(\omega_{a}nt - \varphi_{an})\} \quad \ldots \quad (36)$$

$A_{am}$ is magnitude of $u_{am}$, $\omega_{am}$ is frequency of $u_{am}$ and $\varphi_{am}$ is a phase of $u_{am}$. $A_{an}$ is magnitude of $u_{an}$, $\omega_{an}$ is frequency of $u_{an}$ and $\varphi_{an}$ is a phase of $u_{an}$.

A frequency interval $\Omega_D$ of the auxiliary signals $u_{am}$, $u_{an}$ is the same as a frequency interval of the reference wave components $s_{rm}$, $s_{rn}$ as shown in FIG. 14.

A middle value $(\omega_{an} - \omega_{am})/2$ of the frequency $\omega_{rn}$ and the frequency $\omega_{am}$ is set between two frequency $\omega_{rn}$ and $\omega_{rm}$. reference wave component $s_{rm}$, frequency of $s_{rn}$.

$\omega_{rn}$ is the frequency of the reference wave component $s_{rn}$, $\omega_{rm}$ is the frequency of the reference wave component $s_{rn}$.

Frequency difference between reference wave component $s_{rm}$ and auxiliary signal $u_{am}$ (or frequency difference between reference wave component $s_{rn}$ and auxiliary signal $u_{an}$) is defined as $\Delta\omega$. That is, the next ceremony is passed.

That is, the next formula consists.

$$\Delta\omega = \omega_{rm} - \omega_{am} = \omega_{rn} - \omega_{an}$$

Relation of expression (37) consists between $\Delta\omega$ and $\Omega_D$ in this constitutional example.

$$|\Delta\omega| < |\Omega_D|/2 \quad \ldots \quad (37)$$

The auxiliary signal $u_{am}$, $u_{an}$ are represented by expression (38), expression (39).

$$u_{am} = A_{am} \exp[\{j(\omega_{rm} - \Delta\omega)t - \varphi_{am}\}] \quad \ldots \quad (38)$$

$$u_{an} = A_{an} \exp[\{j(\omega_{rm} - \Delta\omega)t - \varphi_{an}\}] \quad \ldots \quad (39)$$

The relative phase detecting part 2332 acquires $s_{rm}$, $s_{rn}$ through optical divider $c_1$.

The beat signal $B_{T1}$ and beat signal $B_{T2}$ are generated by the reference wave component $s_{rm}$, $s_{rn}$ and the auxiliary signal $u_{am}$, $u_{an}$.

The beat signal $B_{T1}$ is generated from the reference wave component $s_{rm}$ that frequency is lower and the auxiliary signal $u_{am}$ that frequency is lower.

The beat signal $B_{T2}$ is generated from the reference wave component $s_{rn}$ that the frequency is higher and the auxiliary signal $u_{an}$ that the frequency is higher.

And multiplication signal of these two beat signals $B_{T1}$, $B_{T2}$ is generated.

The coupler CP couples two reference wave component $s_{rm}$, $s_{rn}$ and two auxiliary signal $u_{am}$, $u_{an}$ and generates coupling signal. And this coupled signal is executed photo-electric translation by photo diode (PD).

Output of the photo diode (PD) includes beat signal $B_{T1}$ and beat signal $B_{T2}$.

The beat signal $B_{T1}$ is generated by the reference wave component $s_{rm}$ and the auxiliary signal $u_{am}$.

The beat signal $B_{T2}$ is generated by reference wave component $s_{rn}$ and the auxiliary signal $u_{an}$.

. The band pass filter (BPF) extracts beat signal $B_{T1}$ and $B_{T2}$ (frequency $\Delta\omega$) from these beat signal.

$B_{T1}$ is a beat signal of frequency $\Delta\omega$ occurring because of the reference wave component $s_{rm}$ and the auxiliary signal $u_{am}$.

$B_{T2}$ is a beat signal of frequency $\Delta\omega$ occurring because of the reference wave component $s_{rn}$ and the auxiliary signal $u_{am}$.

A output of the band pass filter (BPF) includes section as shown in the expression (40).

$2A_{rm}A_{am}\cos\{\Delta\omega t+(\varphi_{rm}-\varphi_{am})+cnst_1\}]+2A_{rn}A_{an}\cos\{\Delta\omega_t+(\varphi_{rn}-\varphi_{an})+cnst_2\}]$ ... (40) Here,

$$cnst_1 = (2\pi/c) \times [\omega_{rm}n_rL_r - \omega_{am}n_aL_a])$$

$$cnst_2 = (2\pi/c) \times [\omega_{rn}n_rL_r - \omega_{an}n_aL_a])$$

c: light velocity

$n_r$: refractive index of reference wave path

$n_a$: refractive index of auxiliary signal path

$L_r$: reference wave path length

$L_a$: auxiliary signal paths length

First term of the expression (40) is element of beat signal $B_{T1}$. Second term of the expression (40) is element of beat signal $B_{T2}$. Output of the band pass filter (BPF) (Beat signal $B_{T2}$) is divided into two paths by a divider (DV). $T_{ww}$ signals via two paths are multiplied by a mixer (MX).

Output of the mixer (MX) (multiplication signal MPL) is represented like expression (41).

This embodiment is simplized, $\varphi_{an}$ equals $\varphi_{am}$ ($\varphi_{an}=\varphi_{am}$).

$$MPL = (A_{rm}^2A_{am}^2 + A_{rn}^2A_{an}^2)/2$$
$$+A_{rm}A_{rn}A_{am}A_{an}\cos(cnst_2 - cnst_1) + R(\Delta\omega t) \quad ... \quad (41)$$

The term ($cnst_2 - cnst_1$) of expression (41) is represented by an expression (42).

$$cnst_2 - cnst_1 = (2\pi/c)$$
$$\times [(\omega_{rn}n_r - \omega_{rmnr})L_r - (\omega_{am}n_a - \omega_{an}n_a)L_a] \quad ... \quad (42)$$

$R(\Delta\omega_t)$ in expression (41) is a facility depending on product of beat frequency and time.

Relative phase arithmetic logical unit (RPP) withdraws DC of multiplication signal MPL as described below (cf. expression (43)and expression (44)).

Relative phase arithmetic logical unit (RPP) removes constant to be decided by detection system from the DC component.

Relative phase arithmetic logical unit (RPP) detects relative phase ($\varphi_{rn}-\varphi_{rm}$) of two reference wave components $s_{rm}$, $s_{rn}$.

Direct current component DC of multiplication signal MPL is represented based on expression (41) as follows.

$$DC = (A_{rm}^2Aam^2 + A_{rn}^2A_{an}^2)/2$$
$$+A_{rm}A_{rn}A_{am}A_{an}\cos[(\varphi_{rm}-\varphi_{rn}) + (cnst_2 - cnst_1)] \quad ... \quad (43))$$

Only cosine portion is extracted by this expression, and it is normalized.

Normalized direct current component $DC_{NML}$ is represented like expression (44).

Note that $A_{rm}A_{rn}A_{am}A_{an}$ is value measured beforehand.

$$DC_{NML} = \cos[(\varphi_{rn}-\varphi_{rm}) + (cnst_2 - cnst_1)] \quad ... \quad (44))$$

Two reference wave component $s_{rm}$, relative phase $\Phi_r$ ($=(\varphi_{rn}-\varphi_{rn})$) of $s_{rn}$ are got by this normalized DC $DC_{NML}$ by removing an element (constant ($cnst_2 - cnst_1$) decided by detection system) that does not depend on the phase.

Note that (44), by the expression, it omits (half) for offset, and it is shown.

The relationship between normalized direct current component $DC_{NML}$ and relative phase $\Phi_r$ is shown in FIG. 15. As shown in FIG. 15, relative phase arithmetic logical unit (RPP) usually detects two relative phase $\Phi_{r(1)}$, $\Phi_{r(2)}$ in appearance about a certain $DC_{NML}$.

$\Phi_{r(1)}$ is between zero - n [rad], and $\Phi_{r(2)}$ is between $2\Pi$-$\Pi$[rad].

Relative phase of reference wave components $s_{rm}$, $s_{rn}$ are in (0-n)[rad] or in (n-2n) [rad]. The relative phase of two reference wave components $s_{rm}$, $s_{rn}$ belong to either of two zone.

But, nobody can know phase angle zone that the relative phase belongs.

In this case, either part of a reference wave path or the auxiliary signal path can be provided with signal path length modulation region.

The signal path length modulation department can be had built-in to auxiliary signal generation part 2331.

One of two "relative phase $\Phi_{r(1)}$, $\Phi_{r(2)}$ in the appearance" which it showed in FIG. 15 is identified as "true relative phase".

For example, it supposes supporting signal path length La that only a micro distance was extended.

Then value of $cnst_2$-$cnst_1$ of expression (42) turns small.

It supposes supporting signal path length La that only a micro distance was shortened.

Then value of $cnst_2$-$cnst_1$ of expression (42) turns large.

For example, it supposes supporting signal path length $L_r$ that only a micro distance was extended.

Then value of $cnst_2$-$cnst_1$ of expression (42) turns large.

It supposes supporting signal path length $L_r$ that only a micro distance was shortened.

Then value of $cnst_2$-$cnst_1$ of expression (42) turns small.

For example, value of $DC_{NML}$ is $\gamma$, and it is assumed that two relative phases $\Phi_{A(1)}$, $\Phi_{A(2)}$ were detected in an appearance (cf. FIG. 15).

In this case, it is assumed that it changed supporting signal path length $L_a$ into $L_a$+$\Delta L$ ($\Delta L$> 0).

As shown in FIG. 16 (A), the signal path length characteristic varies from $L_a$ (a solid line) to $L_a$+$\Delta L$ (a broken line).

If $DC_{NML}$ decreased to $\gamma_{(1)}$ then, it is determined that $\Phi_{r(1)}$ is "true relative phase".

If $DC_{NML}$ increased to $\gamma_{(2)}$, it is determined that $\Phi_{r(2)}$ is "true relative phase".

Also, it is assumed that it changed supporting signal path length $L_a$ into $L_a$+$\Delta L$ ($\Delta L$ <0).

In this case, as shown in FIG. 15 (B), signal path length characteristic varies from La (a solid line) to $L_a$+$\Delta L$ (a broken line).

If $DC_{NML}$ decreased to $\gamma_{(1)}$ then, it is determined that $\Phi_{r(2)}$ is "true relative phase".

If DCNML increased to $\gamma(2)$, it is determined that $\Phi r(1)$ is "true relative phase".

<Scond constitutional example>

A frequency selectivity part is removed from the object measurement device 200 of FIG. 3 and FIG. 4, the object measurement device 200 of FIG. 12 is thereby constructed.

The property identification device 23 becomes from the photo detector 231, the arithmetic processing component 232, the electric field spectrum measurement part 233 and the beam splitter 234.

In FIG. 12, the property identification device 23 extracts reference wave components $S_{r1}$,$S_{r2}$,...,$S_{rN}$ (arranged in low order of the frequency) where frequency components are different from reference wave $S_r$ in a lump.

A group of two reference wave components $s_{rm}$, $s_{rn}$ (typically n = m+1) in these is chosen.

And process to detect relative phase and magnitude changes combination of the reference wave component, and it is executed multiply (it makes parallel processing).

The property identification device 23 becomes from the photo detector 231, the arithmetic processing component 232 and the electric field spectrum measurement part 233.

In this constitutional example, the electric field spectrum measurement part 233 comprises an auxiliary signal generation part 2331, a relative phase detecting part 2332, a magnitude detecting part 2333 and a frequency resolution region 2335.

Also, in this constitutional example, the arithmetic processing component 232 comprises arithmetic unit 2321 and the memory 2322.

In this constitutional example, electric field spectrum $E_r(\omega)$ of the reference wave $S_r$ can be measured by electric field spectrum measurement part 233 like the first constitutional example.

In this case, the light absorption board 224 is set at position of the measurement object O, and the photo detector 231 can detect only reference wave Sr.

And electric field spectrum measurement part 233 takes reference wave $S_r$ through the beam splitter 234.

Frequency resolution department 2335 generates a plurality of reference wave components $S_{r1}$,$S_{r2}$, ...,$S_r$ which are included in reference wave $S_r$ as frequency component.

Auxiliary signal generation part 2331 generates two auxiliary signals that frequency interval is the same as the frequency interval of two adjacent reference wave components.

Frequency middle value of two auxiliary signals is set between frequency of two adjacent reference wave components. Relative phase detecting part 2332 detects relative phase of reference wave components $s_{rk}$, $s_{r(k+1)}$ from synthesized wave with two adjacent reference wave components $s_{rk}$, $s_{r(k+1)}$ and auxiliary signals $u_{ak}$, $u_{a(k+1)}$.
In this constitutional example, relative phases of (q-1) units are detected at the same time.

The magnitude detecting part 2333 detects the magnitude $A_{rk}$ of reference wave component $s_{rk}$ from processed signals in relative phase detecting part 2332.
In this constitutional example, the magnitudes $A_{rk}$ of q units are detected at the same time (k=1,2,...,q).
Arithmetic unit 2321 takes a detection result of these relative phase and a detection result of the magnitude.
Detection result is recorded to the memory 2322.
Electric field spectrum $E_r(\omega)$ of the reference wave $S_r$ can be operated by these record results.

That is, it measures cross-correlation with reference wave $S_r$ and measurement wave Ss as having illustrated by FIG. 4 and can derive electric field spectrum $E_r(\omega)$ of crowd Ss measuring that Fourier transform does this and can measure various kinds of property of the measurement object O.
It shows configuration of relative phase detecting part 2332 and amplitude detecting part 2333 in FIG. 13.

The relative phase detecting part 2332 comprises of
an arrayed-waveguide grating ( AWG) with the q-output terminals, a group (PDG) of photodiodes (PD) which it provided in the output side,
a signal selective circuit (SLCT) which respectively selects two signals from output signals of PDG,
a group (MIXG) of (q-1) mixer units to multiply output signals of SLCT,
a relative phase arithmetic logical unit (RPP) which it inputs output signals of MIXG and detects relative phase.

In this embodiment, the beat signal $B_{T1}$ of $s_{r1}$ and $u_{a1}$, the beat signal $B_{T2}$ of $S_{r2}$ and $u_{a2}$, ..., the beat signal $B_{Tq}$ of $s_{rq}$ and $u_{aq}$ are input into the signal selective circuit SLCT.
The signal selective circuit SLCT selects beat signal like $(B_1,B_2)$, $(B_2,B_3)$, $(B_3,B_4)$, ..., $(B_{N-1},B_N)$ so that "overlap is permitted".
All beat signals are thereby connected through phase.

Mixers of (N-1) units to comprise mixer group MIXG multiply two beat signals.
Multiplication signal (multiplication of k-th beat signal and (k+1)-th beat signal) is sent out to the first relative phase arithmetic logical unit of the relative phase arithmetic logical unit RPP.

In the k-th relative phase arithmetic logical unit, a constant to be decided by the detection system is removed from DC component of each multiplication signal of MIXG A constant to be decided is removed from the DC of each multiplication signal of MIXG in the k-th relative phase arithmetic logical unit (k = 1,2,..., q-1) by detection system.

The magnitude detecting part 2333 consists of
a 1st magnitude arithmetic logical unit,
a 2nd magnitude arithmetic logical unit,
...
a 9th magnitude arithmetic logical unit.
The magnitude $A_{rk}$ of the reference wave component $s_{rk}$ is detected by magnitude of the k-th beat signal.
The relative phase $\varphi_{r(k+1)}$-$\varphi_{rk}$ and the magnitude $A_{rk}$ are memorized as electric field spectrum $E_r(\omega)$ to the memory 2322 of the arithmetic processing component 232.

In this example, generation of the beat signal, multiplication of the beat signal, detection process of relative phase and magnitude detection are executed in parallel by using the AWG 321.
Thus, high-speed arithmetic becomes possible.

Two solutions of the relative phase may produce even the object measurement device 200 of this constitutional example like constitutional example 1.
In this case, signal path length (optical path length) is modulated by signal path length modulation part with constitutional example 1 similarly.
"True relative phase" is thereby determined.


DENOTATION OF REFERENCE NUMERALS

| | |
|---|---|
| 5, 6, 7, 8, 12, 22 | interferometer |
| 11, 21, 51, 61, 71, 81 | light source |
| 13, 23 | property identification device |
| 24, 54, 64, 74, 84,131,231 | photo detector |
| 42, 72, 75, 121, 221, 2324 | beam splitter |
| 49, 59, 69, 79 | translation stage |

| 53, 63, 73, 83 | modulator |
| --- | --- |
| 100,200 | object measurement device |
| 122,222 | reference mirror |
| 123,223 | reference mirror drive |
| 124 | total reflection mirror |
| 132,232 | the arithmetic processing component |
| 224 | light absorption board |
| 233 | electric field spectrum measurement part |
| 321 | AWG |
| 353,522,551,552,553,621,651,652,751,753, 851,852,853 | lens system |
| 521,522,621,623,632 | beam splitter |
| 532,632,732,733,832 | cylindrical lens |
| 533,633,833 | modulation mirrors |
| 1321, 2321 | arithmetic units |
| 1322, 2322 | memories |
| 2331 | auxiliary signal sections |
| 2332 | relative phase detecting parts |
| 2333 | amplitude detecting parts |
| 2334 | frequency selectivity part |
| 2335 | frequency resolution department |

**Claims**

1. A spectrum measurement device which receives a reference wave propagating in a reference path and a measurement wave propagating in a measurement path having a start point same as a start point of the reference path, and derives a spectrum of the measurement wave,

   wherein the spectrum is a spectrum of measurement wave that is turned back on surface or inside of a measurement object,

   or a spectrum of measurement wave that penetrates the measurement object,

   a spectrum of the measurement wave is measured based on spectrum of the reference wave and a signal being proportional to square of an synthesized wave of the reference wave and the measurement wave.

2. A spectrum measurement device according to claim 1,

   wherein spectrum of the measurement wave is power spectrum and the power spectrum is represented by next expression.

   [a spectrum provided by executing Fourier transform of signal proportionate to square of an synthesized wave of a reference wave and a measurement wave]$^2$/[a spectrum of a reference wave]

3. An object measurement device comprising a property identification device,

   wherein the property identification device has a facility of the spectrum measurement device described in claim 1,

   the reference wave path and the measurement wave path have the same start point,

   the measurement wave path is formed to be turned back on surface or inside of a measurement object, or to penetrate the measurement object,

   the property identification device derives property information (for example, at least one of space information, energy structural information, refractive index, transmission factor and reflectance) of the measurement device based on spectrum of the measurement wave.

4. An object measurement device according to (3),

   wherein the reference wave has a characteristic that delay time or advance time changes gradually along a virtual line which is perpendicular to a propagation direction,

   or, the reference wave has a characteristic that delay time or advance time changes gradually along a virtual line on a virtual XY plane which is perpendicular to a propagation direction.

5. A spectrum measurement device receives reference wave propagating in a reference path, and receives measurement wave propagating in a measurement path having a start point same as a start point of the reference path, derives spectrum of the measurement wave,

   wherein a spectrum of the reference wave is derived,

at the same time, Fourier transform of cross-correlation between the reference wave and the measurement wave is got,

the spectrum of the measurement wave is got based on the spectrum of the reference wave and the Fourier transform of the cross-correlation.

6. An object measurement device comprising a property identification device,
wherein the property identification device has facility of the spectrum measurement device described in claim 5,
a reference wave path and the measurement wave path have the same start point,
the measurement wave path is formed to be turned back on surface or inside of a measurement object, or to penetrate the measurement object,
the property identification device derives property information (for example, at least one of space information, energy structural information, refractive index, transmission factor and reflectance) of the measurement device based on spectrum of the measurement wave.

7. An object measurement device according to claim 6,
wherein the reference wave has a characteristic that delay time or advance time changes gradually along a virtual line which is perpendicular to a propagation direction,
or, the reference wave has a characteristic that delay time or advance time changes gradually along a virtual line on a virtual XY plane which is perpendicular to a propagation direction.

8. A spectrum measurement device which receives
a reference wave propagating in a reference path and
a first measurement wave, a second measurement wave, ... , a N-th measurement wave propagating in a first measurement paths, a second measurement paths, ..., a N-th measurement paths having a start point same as a start point of the reference path, and derives spectra of the first, the second, ...., the N-th measurement wave, wherein the spectra are
spectra of the first measurement wave, the second measurement wave, ..., the N-th measurement wave which are turned back on surface or inside of a measurement object, or
spectra of the first measurement wave, the second measurement wave, ..., the N-th measurement wave which penetrate the measurement object;
spectra of the first measurement wave, the second measurement wave, ... , the N-th measurement wave are measured based on spectra of the reference wave and signals being proportional to square of each synthesized wave of the reference wave and the 1st, the 2nd, ... , the N-th measurement wave.

9. The spectrum measurement device according to claim 8,
wherein each spectrum of the first measurement wave, the second measurement wave, ..., the N-th measurement wave is power spectrum,
the power spectrum of the k-th measurement wave (k: 1,2,... or N) is represented by next expression.
[a spectrum provided by executing Fourier transform of signal proportionate to square of an synthesized wave of a reference wave and a k-th measurement wave]$^2$/[a spectrum of a reference wave]

10. An object measurement device comprising a property identification device,
wherein the property identification device has facili of the spectrum measurement device described in claim 9,
the reference wave path and a first measurement wave path, a second measurement wave path, ..., the N-th wave path have the same start point,
the first measurement wave path, the second measurement wave path, ..., the N-th measurement wave path are formed to be turned back on surface or inside of a measurement object, or to penetrate the measurement object,
the property identification device derives property information of the measurement device based on spectra of a first measurement wave, a second measurement wave , ..., a N-th measurement wave.

11. Object measurement device according to claim 10,
wherein the reference wave has a characteristic that delay time or advance time changes gradually along a virtual line which is perpendicular to a propagation direction,
or, the reference wave has a characteristic that delay time or advance time changes gradually along a virtual line on a virtual XY plane which is perpendicular to a propagation direction.

12. A spectrum measurement device which receives a reference wave propagating in a reference path and a first measurement wave, a first measurement waves, a second measurement wave, ..., a N-th measurement wave propagating in a first measurement path, a second measurement path, ..., a N-th measurement path having respectively a start point same as a start point of the reference path, and derives electric field spectra of the first measurement wave, the second measurement wave, ...N-th measurement wave,

wherein Fourier transform of the cross-correlation between the reference wave and the first measurement wave, the second measurement wave, ..., the N-th is respectively derived, and the electric field spectra are measured based on the spectra of the reference wave and Fourier transform of the cross-correlation.

13. An object measurement device comprising a property identification device,

wherein the property identification device has facility of the spectrum measurement device described in claim 12,

a reference wave path and a first measurement wave path, a second measurement wave path, ..., a N-th measurement wave path have the same start point,

the first measurement wave path, the second measurement wave path, ..., the N-th measurement wave path are formed to be turned back on surface or inside of a measurement object, or to penetrate the measurement object,

the property identification device derives property information of the measurement device based on spectrum of the first measurement wave, the second measurement wave path, ..., the N-th measurement wave.

14. An object measurement device according to claim 13,

wherein the reference wave has a characteristic that delay time or advance time changes gradually along a virtual line which is perpendicular to a propagation direction,

or, the reference wave has a characteristic that delay time or advance time changes gradually along a virtual line on a virtual XY plane which is perpendicular to a propagation direction.

*fig. 1*

*fig. 2*

123(Reference Mirror drive part )

122(Reference Mirror )          100(Object Measurement Device)

12

11

PTH$_r$

Light
Source

measured object O

121          PTH$_M$

13：property identification equipment

132：arithmetic processing components

131
(photodetector)

1321：computing units          1322

Cross-correlation
arithmetic

Power spectrum arithmetic
of the measurement wave,
Property arithmetic of
measured object O

memory
(auto-correlation)

## fig. 3

223(Reference Mirror drive part )

222(Reference Mirror )

200(Object Measurement Device)

21

22

$PTH_r$

Light Source

224(Light absorption board)

221

$PTH_M$

23:property identification equipment

232:arithmetic processing components

234

$S_r$

Relative Phase Detection Part

2332

2331

$u_{am}, u_{an}$

2333

Auxiliary Signal Sections

$\phi_{rn} - \phi_{rnm}$

Amplitude Detector Part

231 (photodetector)

232:arithmetic processing components

$A_{rm} \cdot A_{rn}$

2321:computing units

2322

Arithmetic Electric Field Spectrum of Reference Wave

memory (auto-correlation)

Electric Field Spectrum Er

## fig. 4

223(Reference Mirror drive part )

222(Reference Mirror )

200(Object Measurement Device)

22

21

Light Source

$PTH_r$

measured object O

221

$PTH_M$

23 : property identification equipment

232 : arithmetic processing components

234

$S_r$

Relative Phase Detection Part

2332

2331

Auxiliary Signal Sections

2333

Amplitude Detector Part

231 (photo-detector)

232 : arithmetic processing components

2321 : computing units

2322

Cross-correlation arithmetic

Power spectrum arithmetic of the measurement wave, Property arithmetic of measured object O

memory (auto-correlation)

*fig. 5*

g

Reference WaveS$_r$

Propagation
Direction

(A)

131or231
(Detector)

g'  g

Reference Wave Sr
having time lag
along Line G

Δt

Propagation
Direction

(B)

131or231
(Detector)

## fig. 6

Reference WaveS$_r$

Propagation
Direction

131or231
(Detector)

X
Y

(A)

Reference Wave Sr
having time lag
along X-axis

Δt

Propagation
Direction

XYPlaneα

XYP laneα

X
Y

131or231
(Detector)

(B)

*fig. 7*

122(Reference Mirror)

100(Object Measurement Device)

$Lr = L0 + c\,\tau$

$n_0$

11

124(Total Reflection Mirrorミラー)

Light Source

121 (BS)

B0

Light Detector 131

132

Arithmetic Processing Component

Property Identification Device13

*fig. 8*

Property Identification Device13

31

## fig. 9

fig. 10

*fig. 11*

223(Reference Mirror driver)

222(Reference Mirror)

21

22

Light Source

Light Absorption Board/Boards 224
or Measurement Object O

200(Object Measurement Device)

221

23:Property Identification Device

233:Electrolysis Spectrum Measurement Part

2332
Relative Phase Detection Part

$\phi_{rn}-\phi_{rm}$

234

$S_r$

2333

$s_{rm}, s_{rn}$

Amplitude Detector Part

$A_{rm}$

Auxiliary Signal Sections

$u_{am}, u_{an}$

$u_{am}$

231
(Light Detector)

$u_{an}$

$A_{rn}$

2331

232:Arithmetic Processing Component

2322
Memory
(Electric Field Spector)

2321
Arithmetic Logical Unit

*fig. 12*

233: Electric Field Spectrum Measurement Department

*fig. 13*

fig. 14

*fig. 15*

*fig. 16*

223(Reference Mirror driver)

222(Reference Mirror)

22

21

Light Absorption Board/Boards 224
or Measurement Object O

200(Object Measurement Device)

Light
Source

221

23:Property Identification Device

233:Electrolysis Spectrum Measurement Part

2332
Relative
Phase
Detection
Part

234

$u_{a1}, u_{a2}, \cdots u_n, u_{aq}$

2333
Amplitude
Detector
Part

231
(Light Detector)

Auxiliary
Signal
Sections

2331

232:Arithmetic Processing Components

2322
Memory
(Electric Field Spector)

2321

$A_{r1}, A_{r2}, \cdots A_{rq}$

Arithmetic
Logical Unit

$\phi_{r2} - \phi_{r1}$
$\phi_{r3} - \phi_{r2}$
$\cdots$
$\phi_{rq} - \phi_{r(q-1)}$

## fig. 17

233:Electrolysis Spectrum Measurement Part

2332(Relative Phase Detection Part)

fig. 18

*fig. 19*

Reference
Signal $s_r$

$\omega$

Characteristic
of Terminal
of AWG

$u_{r(k-1)}$

$u_{rk}$

$\Omega_D$

Object Component
$u_{r(k-1)}$, $u_{rk}$

$\omega$

$(\omega_{rm}-\Delta\omega)$   $\omega_{r(k-2)}$   $\omega_{r(k-1)}$   $\omega_{rk}$

$\Delta\omega$   $\Delta\omega$

$\Omega_D$

$u_{a(k-1)}$   $u_{ak}$   $u_{a(k+1)}$

auxiliary signal
$u_a$

$\omega$

$\omega_{a(k-1)}$   $\omega_{ak}$   $\omega_{a(k+1)}$

$(\omega_{rk}-\Delta\omega)$   $(\omega_{rn}-\Delta\omega)$

fig. 20

51

Light
Source

521

53

5 (Interferometer)

552

522

553

523

54

59

fig. 21

（A）

（B）

fig. 22

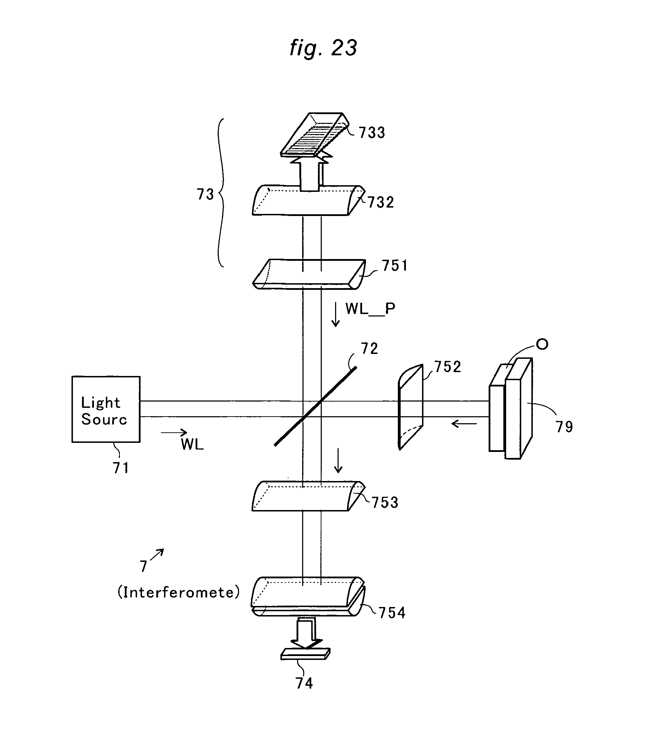

## fig. 23

EP 2 565 621 A1

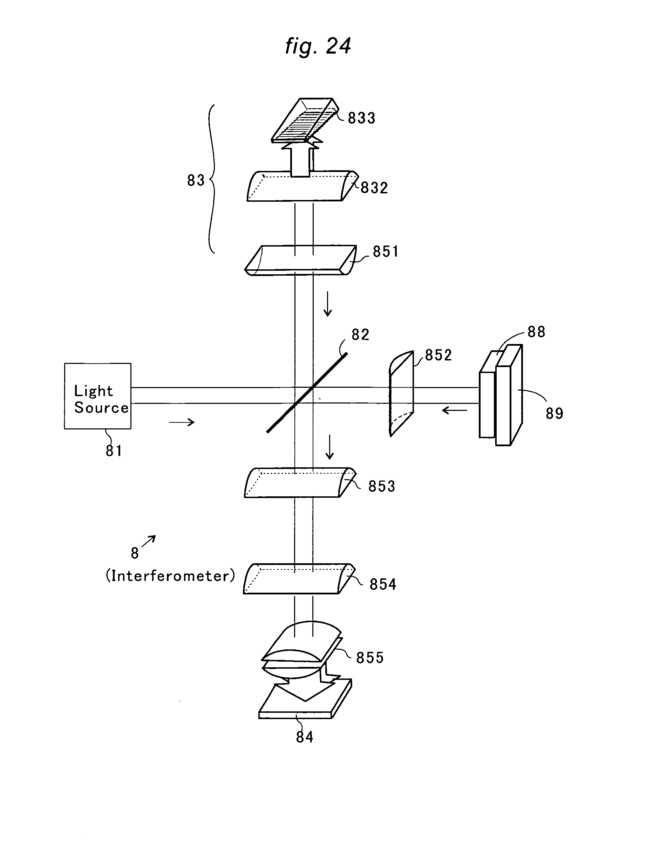

*fig. 24*

833

83 832

851

82

852

88

Light Source

89

81

853

8
(Interferometer)

854

855

84

47

| INTERNATIONAL SEARCH REPORT | International application No. |
| --- | --- |
| | PCT/JP2011/056479 |

**A. CLASSIFICATION OF SUBJECT MATTER**
*G01N21/17*(2006.01)i, *G01B9/02*(2006.01)i, *G01B11/24*(2006.01)i

According to International Patent Classification (IPC) or to both national classification and IPC

**B. FIELDS SEARCHED**

Minimum documentation searched (classification system followed by classification symbols)
G01N21/00-21/61, G01B9/00-9/10, G01B11/00-11/30

Documentation searched other than minimum documentation to the extent that such documents are included in the fields searched
Jitsuyo Shinan Koho            1922–1996    Jitsuyo Shinan Toroku Koho    1996–2011
Kokai Jitsuyo Shinan Koho    1971–2011    Toroku Jitsuyo Shinan Koho    1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-038910 A  (Canon Inc.), 18 February 2010 (18.02.2010), entire text; all drawings & WO 2010/005091 A1 | 1-14 |
| A | JP 2010-032426 A  (Canon Inc.), 12 February 2010 (12.02.2010), entire text; all drawings & US 2010/0027019 A1    & EP 2149776 A1 & CN 101639339 A | 1-14 |
| A | JP 2009-541770 A  (Optopol Technology Spolka Akcyjna), 26 November 2009 (26.11.2009), entire text; all drawings & US 2009/0262359 A1    & EP 1870028 A1 & EP 2120686 A          & WO 2007/148310 A2 | 1-14 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 July, 2011 (12.07.11) | 26 July, 2011 (26.07.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/056479

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-298767 A (Canon Inc.),<br>11 December 2008 (11.12.2008),<br>entire text; all drawings<br>& US 2010/0166293 A & EP 2152144 A<br>& WO 2008/139799 A1 & CN 101674770 A | 1-14 |
| A | JP 2008-151734 A (Fujifilm Corp.),<br>03 July 2008 (03.07.2008),<br>entire text; all drawings<br>(Family: none) | 1-14 |
| A | JP 2007-101250 A (Fujifilm Corp.),<br>19 April 2007 (19.04.2007),<br>entire text; all drawings<br>& US 2007/0086011 A1 | 1-14 |
| A | JP 2007-101249 A (Fujifilm Corp.),<br>19 April 2007 (19.04.2007),<br>entire text; all drawings<br>& US 2007/0076211 A1 & EP 1770351 A1<br>& DE 602006001816 D | 1-14 |
| A | JP 2006-122649 A (Nidek Co., Ltd.),<br>18 May 2006 (18.05.2006),<br>entire text; all drawings<br>& US 2006/0087616 A1 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001272335 A

- JP 2003025660 A